# EUROPEAN PATENT SPECIFICATION

(11) **EP 2 960 779 B1**
(45) Date of publication and mention of the grant of the patent: **01.08.2018**
(21) Application number: 15157008.2
(22) Date of filing: 27.02.2015
(51) Int. Cl.: G06F 3/12

(54) **SYSTEM FOR PERFORMING PRINTING USING MOBILE TERMINAL, AND PRINTING METHOD USING MOBILE TERMINAL**
SYSTEM ZUM DRUCKEN UNTER VERWENDUNG EINES MOBILEN ENDGERÄTS UND DRUCKVERFAHREN UNTER VERWENDUNG EINES MOBILEN ENDGERÄTS
SYSTÈME POUR RÉALISER UNE IMPRESSION À L'AIDE D'UN TERMINAL MOBILE, ET PROCÉDÉ D'IMPRESSION UTILISANT UN TERMINAL MOBILE

(30) Priority: 26.06.2014 KR 20140079124
(43) Date of publication of application: 30.12.2015
(73) Proprietor: HP Printing Korea Co., Ltd., Gyeonggi-do 16677 (KR)
(72) Inventor: PARK, Seong-il, Seoul (KR); YOON, Chin, Suwon-si (KR); PANG, Jeong-hun, Yongin-si (KR)
(74) Representative: Appleyard Lees IP LLP

(56) References cited:
- US-A1- 2002 013 869
- US-A1- 2007 124 436
- US-B1- 8 189 225

## Description

### BACKGROUND

### 1. Field

One or more embodiments relate to a printing method using a mobile terminal, and a system that performs the printing method and includes a computing device, a server, the mobile terminal, and an image forming apparatus.

### 2. Description of the Related Art

In printing technology using a private network, print data is stored in a server and is transmitted to a desired printer at a desired time so that printing is performed. Thus, printing convenience improves. However, in some cases, traffic to a private network caused by a printer according to the characteristics of an enterprise environment needs to be minimized. Existing techniques to address this problem include technology of lowering the priority of a printing operation and technology of performing printing at a time period when network traffic is small, but they cannot be fundamental solutions. Additionally, since print data is stored in a server, a security problem may occur.
US 2007/0124436 A1 discloses a system for performing printing using a mobile terminal, in which the printer receives print data from a print server.

Document US 8189225 B2 (published on 29-05-2012) discloses a method for printing via a cloud server.

### SUMMARY

One or more exemplary embodiments include a printing method using a mobile terminal, and a system that performs the printing method and includes a computing device, a server, the mobile terminal, and an image forming apparatus. Accordingly, traffic of a server network may decrease, and printing may be performed without having to store print data in a server, and thus, a security problem may be addressed.

Additional aspects will be set forth in part in the description which follows and, in part, will be apparent from the description, or may be learned by practice of the presented embodiments.

According to the present invention there is provided a system as in claim 1, a non-transitory computer-readable recording medium as in claim 10 and a method as in claim 11. Other features of the invention will be apparent from the dependent claims, and the description which follows.

According to one or more embodiments of the present invention, a system for performing printing by using a mobile terminal includes a computing device which transmits print data and user identification information to a server; the server which determines a mobile terminal of a user to which the server is to transmit the print data, by using the user identification information, and transmits the print data to the determined mobile terminal; the mobile terminal which stores the print data; and an image forming apparatus which receives the print data from the mobile terminal and prints the print data.

The system may further include an authentication server which receives a user authentication request, the user identification information, and identification information of the determined mobile terminal from the image forming apparatus, determines whether the user is authorized, based on the user identification information and the mobile terminal identification information, and transmits a result of the determination to the image forming apparatus.

The mobile terminal may receive identification information of the NFC-tagged image forming apparatus necessary for connection with the NFC-tagged image forming apparatus, when the mobile terminal is near field communication (NFC)-tagged to the image forming apparatus that supports NFC, may set the connection with the image forming apparatus by using the identification information of the NFC-tagged image forming apparatus, and may transmit the print data based on the connection.

The server may generate and store an encryption key for the print data and encrypt the print data by using the encryption key. The image forming apparatus may transmit print data identification information, user identification information, and mobile terminal identification information together with a request for the encryption key to the server in order to decrypt the encrypted print data, may receive the encryption key from the server when the server determines that the request for the encryption key is accepted, and may decrypt the encrypted print data by using the encryption key in order to form an image.

The server may set a point of time when to transmit the print data to the mobile terminal and may transmit the print data to the mobile terminal at the set point of time.

The server may render the print data into a file in a format that is supported by the image forming apparatus, and may transmit the file.

The mobile terminal may store the print data in a security area of the mobile terminal.

The server may include a mapping table in which the user identification information is mapped with mobile terminal identification information corresponding to the user identification information, and may determine the mobile terminal to which the server is to transmit the print data, by referring to the mapping table.

The mobile terminal and the image forming apparatus may both support a role as an access point (AP) for providing connection between clients in a wireless communication environment and a role as one client.

According to one or more embodiments of the present invention, a printing method using a mobile terminal includes transmitting print data and user identification information from a computing device to a server; determining a mobile terminal of a user to which the server is to transmit the print data, by using the user identification information; transmitting the print data to the determined mobile terminal; storing the print data in the mobile terminal; transmitting the print data from the mobile terminal to an image forming apparatus; and printing the print data.

The transmitting of the print data from the mobile terminal to the image forming apparatus may further include transmitting identification information of the mobile terminal to the image forming apparatus. The printing of the print data may include transmitting a user authentication request, the user identification information, and the mobile terminal identification information from the image forming apparatus to an authentication server located inside or outside the server; determining whether the user is authorized, based on the user identification information and the mobile terminal identification information; transmitting a result of the determination to the image forming apparatus; and printing the print data when it is determined that the user is authorized.

The transmitting of the print data from the mobile terminal to the image forming apparatus may include receiving identification information of the image forming apparatus that is necessary for connection with the image forming apparatus, when the image forming apparatus that supports NFC is tagged by the mobile terminal, wherein the receiving is performed by the mobile terminal; setting the connection with the image forming apparatus by using the identification information of the image forming apparatus; and transmitting the print data based on the connection.

The transmitting of the print data to the determined mobile terminal may include generating and storing an encryption key for the print data; encrypting the print data by using the encryption key; and transmitting the encrypted print data to the mobile terminal. The printing of the print data may include receiving the encrypted print data from the mobile terminal; transmitting, to the server, print data identification information, user identification information, and mobile terminal identification information, together with a request for the encryption key, in order to decrypt the encrypted print data; receiving the encryption key from the server when the server determines that the request for the encryption key is accepted; decrypting the encrypted print data by using the encryption key; and printing the decrypted print data.

The transmitting of the print data to the determined mobile terminal may include setting a point of time when to transmit the print data to the mobile terminal; and transmitting the print data to the mobile terminal at the set point of time.

The transmitting of the print data to the determined mobile terminal may include rendering the print data into a file in a format supported by the image forming apparatus; and transmitting the rendered file to the mobile terminal.

The storing of the print data in the mobile terminal may include storing the print data in a security area of the mobile terminal.

The determining of the mobile terminal of the user to which the server is to transmit the print data may include determining the mobile terminal of the user to which the server is to transmit the print data, by referring to a mapping table in which the user identification information is mapped with mobile terminal identification information corresponding to the user identification information.

The transmitting of the print data from the mobile terminal to the image forming apparatus may include displaying a list of the stored print data on a display of the mobile terminal; receiving a selection of the print data which is to form an image, from the user; and transmitting the selected print data to the image forming apparatus.

### BRIEF DESCRIPTION OF THE DRAWINGS

These and/or other aspects will become apparent and more readily appreciated from the following description of the embodiments, taken in conjunction with the accompanying drawings in which:
FIG. 1 is a schematic diagram of a system for performing printing by using a mobile terminal, according to an embodiment of the present invention;
FIG. 2 is a diagram for describing a printing method using a mobile terminal, according to an embodiment of the present invention;
FIG. 3 is a flowchart of a printing method using a mobile terminal, according to an embodiment of the present invention;
FIGS. 4A-4C are schematic diagrams for describing a printing method using a mobile terminal, according to an embodiment of the present invention;
FIG. 5 is a diagram for describing a printing method using a mobile terminal, according to another embodiment of the present invention;
FIG. 6 is a schematic diagram for explaining a method in which an image forming apparatus performs user authentication in order to perform an image forming job, according to an embodiment of the present invention;
FIG. 7 is a block diagram for describing a printing method using a mobile terminal, according to another embodiment of the present invention;
FIG. 8 is a schematic diagram for explaining a method in which a mobile terminal transmits print data that is to form an image to the image forming apparatus, according to an embodiment of the present invention;
FIG. 9 is a diagram for describing a printing method using a mobile terminal, according to another embodiment of the present invention;
FIG. 10 is a schematic diagram for describing a method of decrypting encrypted print data, according to an embodiment of the present invention;
FIG. 11 is a diagram for describing a printing method using a mobile terminal, according to another embodiment of the present invention;
FIG. 12 is a schematic diagram for describing a method in which a server 300 of the system of FIG. 11 transmits or receives print data, according to an embodiment of the present invention;
FIGS. 13A and 13B are flowcharts of operations of a server in a system for performing printing by using a mobile terminal according to an embodiment of the present invention;
FIG. 14 is a flowchart of an operation of a mobile terminal in a system for performing printing by using a mobile terminal according to an embodiment of the present invention;
FIGS. 15A and 15B are flowcharts of operations of an image forming apparatus in a system for performing printing by using a mobile terminal according to an embodiment of the present invention;
FIG. 16A is a block diagram of a structure of a computing device according to an embodiment of the present invention;
FIG. 16B is a block diagram of a structure of a server according to an embodiment of the present invention;
FIG. 16C is a block diagram of a structure of a mobile terminal according to an embodiment of the present invention;
FIG. 16D is a block diagram of a structure of an image forming apparatus according to an embodiment of the present invention; and
FIG. 16E is a block diagram of a structure of an authentication server according to an embodiment of the present invention.

### DETAILED DESCRIPTION

Reference will now be made in detail to embodiments, examples of which are illustrated in the accompanying drawings, wherein like reference numerals refer to the like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

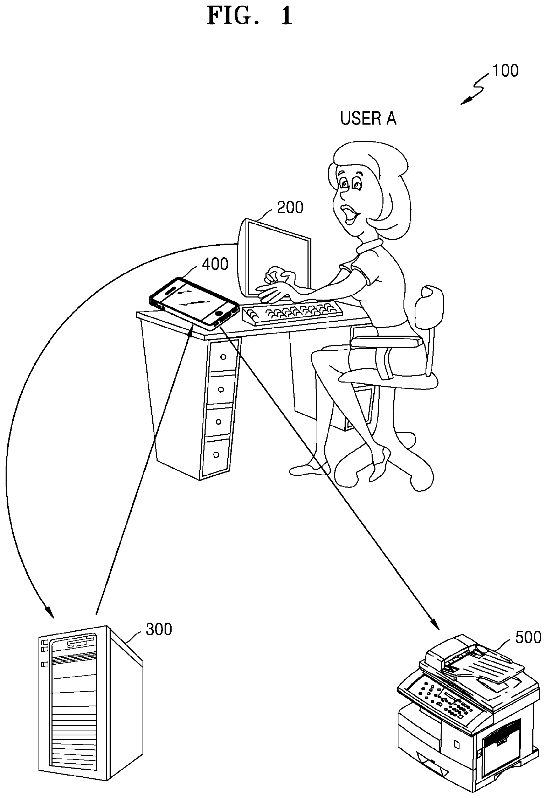

FIG. 1 is a schematic diagram of a system 100 for performing printing by using a mobile terminal, according to an embodiment of the present invention.

Referring to FIG. 1, the system 100 includes a computing device 200, a server 300, a mobile terminal 400, and an image forming apparatus 500.

The computing device 200 may include, but is not limited to, a desktop, a notebook, or a mobile terminal. The computing device 200 may include various devices capable of transmission and reception of print data. The server 300 may be any of various devices capable of transmission, reception, and processing of print data. The mobile terminal 400 may include, but is not limited to, a smartphone or a tablet. The mobile terminal 400 may include various portable terminals capable of transmission and reception of print data to and from other devices. The image forming apparatus 500 may include, but is not limited to, a printer or a multi-function printer. The image forming apparatus 500 may include various apparatuses capable of receiving and printing print data.

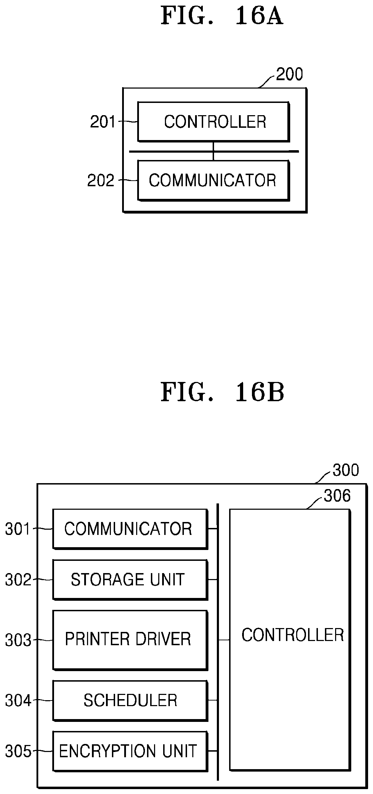

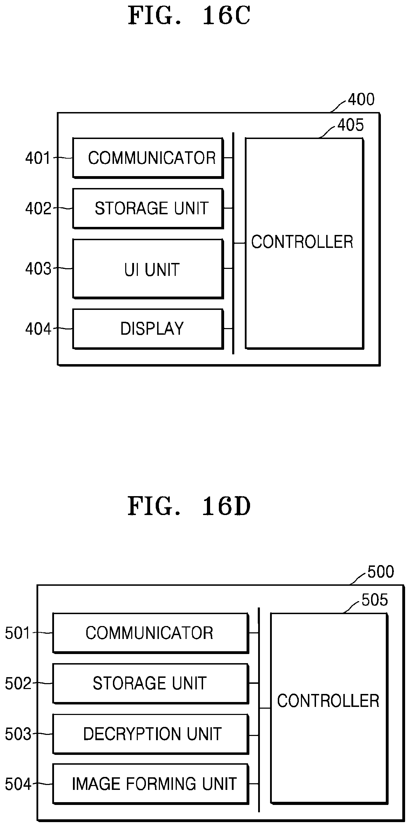

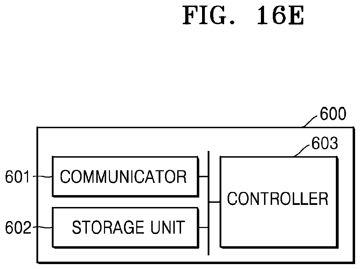

In a printing method using a mobile terminal according to an embodiment of the present invention, the computing device 200 transmits print data selected by a user together with user identification information to the server 300. The user identification information denotes unique information that identifies the user. For example, the user identification information may include information such as the name or identifier (ID) of the user. The user identification information may also include a user password in addition to the name or ID of the user. The user identification information may be acquired from operating system (OS) log-in information of the computing device 200 or may be acquired from the user via user identification information input window when the print data is selected by the user. Embodiments of the present invention are not limited thereto, and the user identification information may be acquired in any of various other methods. A detailed structure of the computing device 200 will be described later with reference to FIG. 16.

The server 300 receives the print data and the user identification information from the computing device 200 and determines a mobile terminal 400 which is to receive the print data from the server 300, by using the user identification information. For example, the server 300 may determine the mobile terminal 400 of the user who selected the print data via the computing device 200, as a mobile terminal to which the server 30 is to transmit the print data.

In detail, the server 300 may include a mapping table in which the user identification information is mapped with mobile terminal identification information corresponding to the user identification information, and may determine the mobile terminal 400 to which the server 300 is to transmit the print data, by using a correspondence between the user identification information and the mobile terminal identification information in the mapping table. The server 300 transmits the print data received from the computing device 200 to the mobile terminal 400.

The mobile terminal identification information denotes unique information that identifies each mobile terminal 400, and may include, for example, an International Mobile Station Equipment Identity (IMEI), a telephone, or a model name serial number. A detailed structure of the server 300 will be described later with reference to FIG. 16.

The mobile terminal 400 receives the print data from the server 300 and stores the print data. When the mobile terminal 400 receives a printing command from the user, the mobile terminal 400 may transmit the stored print data to the image forming apparatus 500 and request the image forming apparatus 500 to perform printing. To transmit the print data to the image forming apparatus 500, the mobile terminal 400 may search for an available image forming apparatus 500 and set connection with the found image forming apparatus 500. Alternatively, the mobile terminal 400 may perform near field communication (NFC) tagging with respect to an image forming apparatus 500 having an NFC function and set connection with the image forming apparatus 500.

The mobile terminal 400 may provide the user with a list of stored print data and receive from the user a selection of the print data, which is to form an image. A detailed structure of the mobile terminal 400 will be described later with reference to FIG. 16.

The image forming apparatus 500 receives the print data from the mobile terminal 400 and prints the received print data. The printing may be any of various image forming operations such as fax transmission and scanning.

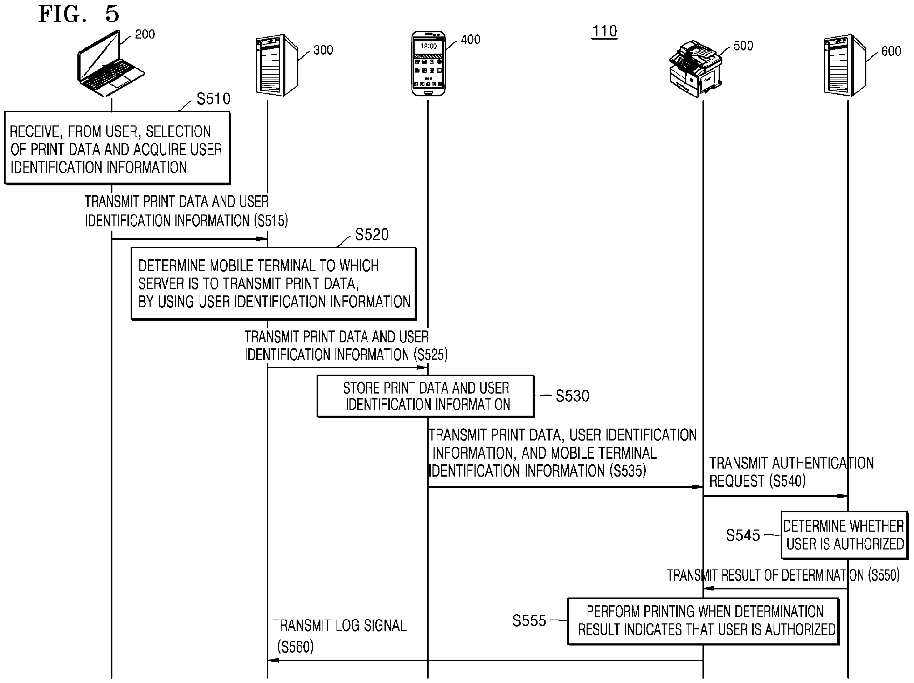

The image forming apparatus 500 may receive the print data from the mobile terminal 200 via Wi-Fi Direct, Bluetooth, ZigBee, or the like. The image forming apparatus 500 may receive the print data according to any of various other communication methods. The image forming apparatus 500 may perform user authentication via an authentication server 600 (see FIG. 5) in order to print the print data received from the mobile terminal 400. To perform the user authentication, the image forming apparatus 500 may receive the user identification information and the mobile terminal identification information from the mobile terminal 400 and may use the user identification information and the mobile terminal identification information during the user authentication. When receives from the authentication server 600 an authentication result indicating that the user authentication has succeeded, the image forming apparatus 500 may print the received print data. A detailed structure of the image forming apparatus 500 will be described later with reference to FIG. 16.

As described above, the system 100 according to present embodiment further includes the mobile terminal 400 in addition to the components of an existing printing system, thereby reducing a load on an internal network of the system 100. In detail, the print data transmitted by the computing device 200 to the server 300 may be transmitted again from the server 300 to the mobile terminal 400 and stored in the mobile terminal 400, and the mobile terminal 400 may transmit the print data to the image forming apparatus 500 at a time point desired by the user to print the print data. Thus, the time to print the print data may be controlled by the user. Moreover, since the print data is directly transmitted to the mobile terminal 400 without being stored in the server 300, security of the print data may be reinforced.

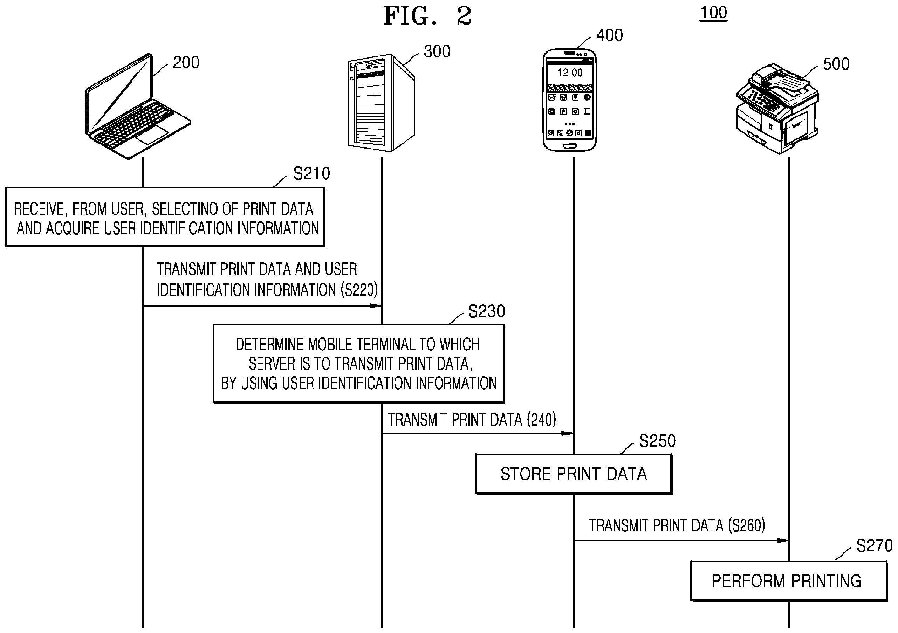

FIG. 2 is a diagram for describing a printing method using a mobile terminal, according to an embodiment of the present invention.

Referring to FIG. 2, in operation S210, the computing device 200 receives, from a user, a selection of print data that is to form an image, and acquires user identification information. The user identification information denotes unique information that identifies the user. For example, the user identification information may include information such as the name or ID of the user. The user identification information may also include a user password in addition to the name or ID of the user. The user identification information may be acquired from OS log-in information of the computing device 200 or may be acquired from the user via a user identification information input window when the print data is selected by the user via the computing device 200. Embodiments of the present invention are not limited thereto, and the user identification information may be acquired using any of various other methods.

In operation S220, the computing device 200 transmits the print data and the user identification information to the server 300.

In operation S230, the server 300 determines that a mobile terminal 400 is to receive the print data from the server 300, by using the user identification information received from the computing device 200.

For example, the server 300 may include a mapping table in which the user identification information is mapped with mobile terminal identification information corresponding to the user identification information, and may determine that the mobile terminal 400 is to receive the print data from the server 300, by using a correspondence between the user identification information and the mobile terminal identification information in the mapping table.

In operation S240, the server 300 transmits the print data to the determined mobile terminal 400.

The server 300 may use a push printing method or a pull printing method to transmit the received print data to the mobile terminal 400.

For example, when a push printing method is used, immediately after determining that the mobile terminal 400 is to receive the print data from the server 300, the server 300 may transmit the print data to the determined mobile terminal 400. Alternatively, when rendering of the print data is necessary, the server 300 may transmit the print data to the determined mobile terminal 400 right after the rendering of the print data is completed. When scheduling is necessary, the server 300 may temporarily store the print data until a point of time determined by the scheduling and then may transmit the print data to the determined mobile terminal 400 at the determined point of time.

On the other hand, when a pull printing method is used, the server 300 may store the received print data and then transmit the print data to the mobile terminal 400 according to a user request.

In operation S250, the mobile terminal 400 stores the print data received from the server 300.

At this time, the mobile terminal 400 may store the print data in a security area. For example, the security area may be a container that is included to reinforce the security of print data and that is physically totally separate from a normal area on an application layer in an Android system. For example, by storing the print data in the security area such as a container, access to the print data by others than the user of the mobile terminal 400 may be restricted, and access to the mobile terminal 400 by a hacking application and the like may be restricted.

In operation S260, the mobile terminal 400 may transmit the print data to the image forming apparatus 500.

In operation S270, the image forming apparatus 500 prints the print data received from the mobile terminal 400.

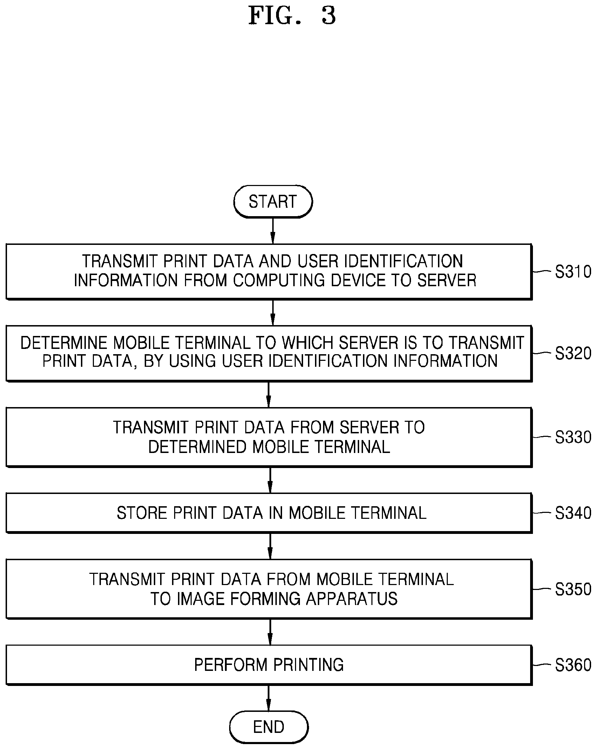

FIG. 3 is a flowchart of a printing method using a mobile terminal, according to an embodiment of the present invention. In particular, the operations of FIG. 3 correspond to operations performed in the system 100 including the computing device 200, the server 300, the mobile terminal 400, and the image forming apparatus 500 of FIG. 1.

Referring to FIG. 3, in operation S310, the computing device 200 transmits the print data and the user identification information to the server 300. In operation S320, the server 300 that has received the print data determines the mobile terminal 400 which is to receive the print data from the server 30, by using the user identification information. When the mobile terminal 400 to receive the print data from the server 300 is determined, the server 300 transmits the print data to the determined mobile terminal 400, in operation S330. In operation S340, the mobile terminal 400 stores the received print data. In operation S350, the mobile terminal 400 transmits the print data to the image forming apparatus 500 so that the image forming apparatus 500 performs image formation. In operation S360, the image forming apparatus 500 prints the print data.

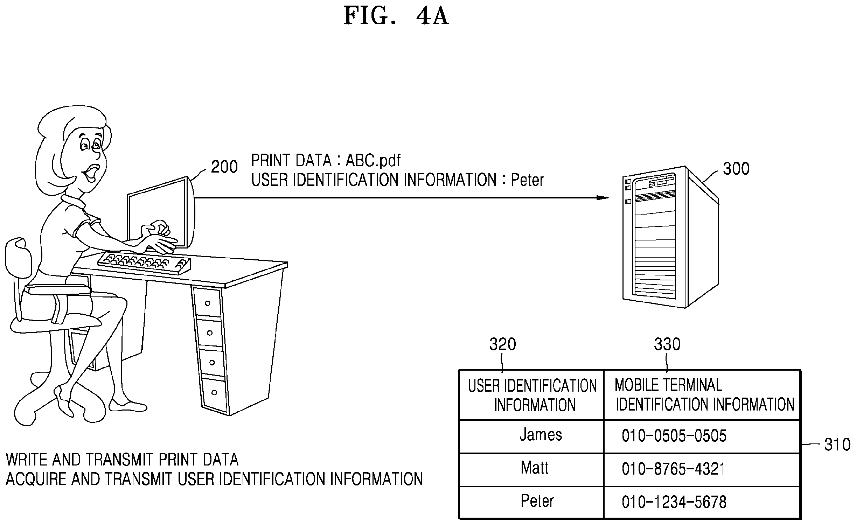

FIGS. 4A-4C are schematic diagrams for describing a printing method using a mobile terminal, according to an embodiment of the present invention.

Referring to FIG. 4A, the computing device 200 receives, from user A, a selection of print data which is to form an image and acquires user identification information. For example, the print data may be data that is written by the computing device 200, or may be data that is transmitted from another device to the computing device 200.

The user identification information denotes unique information that identifies users. For example, the user identification information may include information such as the names or IDs of users. The user identification information may also include user passwords in addition to information such as the names or IDs of users. The user identification information may be acquired from OS log-in information of the computing device 200 or may be acquired from the user via a user identification information input window when the print data is selected by the user via the computing device 200. Embodiments of the present invention are not limited thereto, and the user identification information may be acquired using any of various other methods.

The computing device 200 transmits the selected print data and the acquired user identification information to the server 300.

The server 300 receives the print data and the user identification information from the computing device 200 and determines a mobile terminal 400 to which the server 300 is to transmit the print data, by using the user identification information. In detail, the server 300 may include a mapping table 310 in which user identification information 320 and mobile terminal identification information 330 are mapped with each other and recorded. The server 300 may determine the mobile terminal 400 which is to receive the print data from the server 300, by using a correspondence between the user identification information 320 and the mobile terminal identification information 330 in the mapping table 310.

The mobile terminal identification information 330 denotes unique information that identifies each mobile terminal 400, and may include, for example, an IMEI, a telephone, or a model name serial number.

The mapping table 310 may include the user identification information 320 and the mobile terminal identification information 330 that are mapped with each other. The mapping table 310 may be generated via batch registration of a server manager, may be read from an authentication server such as an LDAP, or may be generated via individual registrations of users. Embodiments of the present invention are not limited thereto, and the mapping table 310 may be obtained by using any of various other methods.

Referring to FIG. 4A, the computing device 200 receives, from user A, a selection of print data "ABC.pdf" and acquires user identification information "Peter" of the user A. The computing device 200 transmits the print data "ABC.pdf" and the user identification information "Peter" to the server 300. The server 300 refers to the mapping table 310 in order to determine a mobile terminal 400 to which the server 300 is to transmit the print data "ABC.pdf". For example, the server 300 searches for mobile terminal identification information "010-1234-5678" corresponding to the received user identification information "Peter" by comparing the received user identification information "Peter" with the user identification information 320 of the mapping table 310, thereby determining a mobile terminal 400 corresponding to "010-1234-5678" as the mobile terminal 400 to which the server 300 is to transmit the print data "ABC.pdf".

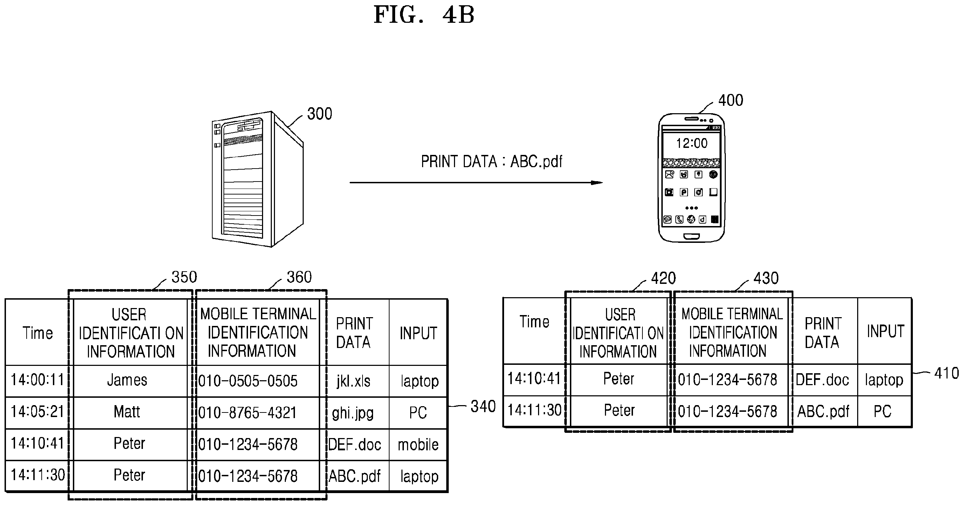

Referring to FIG. 4B, the server 300 transmits the print data to the determined mobile terminal 400. The mobile terminal 400 may receive and store the print data.

After transmitting the print data to the mobile terminal 400, the server 300 may store user identification information 350, mobile terminal identification information 360, and print data identification information associated with transmitted print data in a server data table 340. The server data table 340 is a table for recording information about print data, and may further include, for example, information about time points at which the server 300 has received the print data and information about the identities of computing devices 200 which have transmitted the print data.

The mobile terminal 400 may receive user identification information and print data identification information about the print data together with the print data, and may store the received user identification information and the received print data identification information together with pre-stored mobile terminal identification information. For example, the mobile terminal 400 may include a mobile terminal table 410 in which user identification information 420 corresponding to the received print data and the received print data identification information are mapped with mobile terminal identification information 430 pre-stored in the mobile terminal 400. The mobile terminal table 410 may further include print data time information and computing device identification information.

Referring to FIG. 4B, the server 300 may transmit the print data "ABC.pdf" to the mobile terminal 400 and store user identification information "Peter", mobile terminal identification information "010-1234-5678", and print data identification information "ABC.pdf" associated with the transmitted print data "ABC.pdf" in the server data table 340. The mobile terminal 400 may receive the print data "ABC.pdf" from the server 300 and store the same. In addition to the print data "ABC.pdf", the mobile terminal 400 may further receive the user identification information "Peter", the mobile terminal identification information "010-1234-5678", the print data identification information "ABC.pdf", print data time information "14:11:30", and computing device identification information "PC", which are associated with the print data "ABC.pdf", and store the same in the mobile terminal table 410.

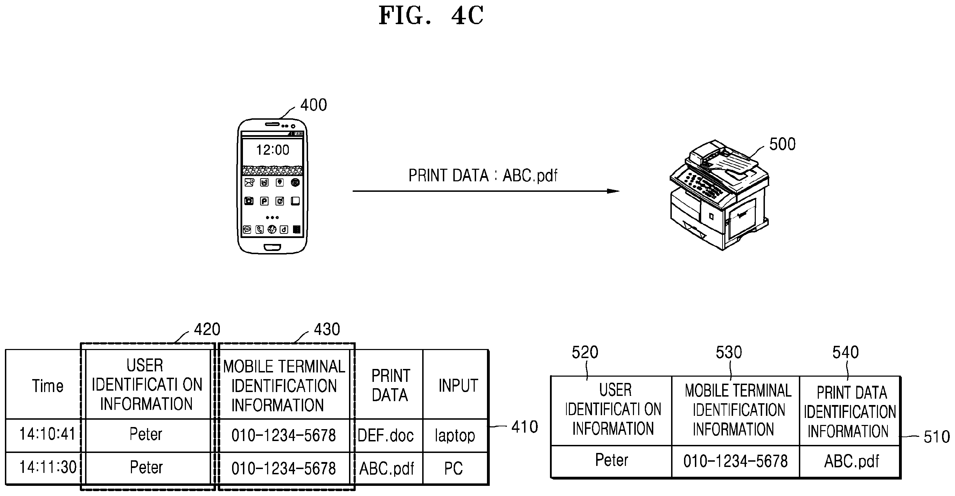

Referring to FIG. 4C, the mobile terminal 400 transmits the print data to the image forming apparatus 500 so that the image forming apparatus 500 prints the print data. The image forming apparatus 500 receives and prints the print data. In order to perform user authentication for image formation, the image forming apparatus 500 may receive user identification information and mobile terminal identification information associated with the print data from the mobile terminal 400 together with the print data. The image forming apparatus 500 may also receive print data identification information in order to make an encryption key request for decoding the print data. For example, the image forming apparatus 500 may include a print data table 510 in which user identification information 520, mobile terminal identification information 530, and print data identification information 540 are mapped with one another and recorded.

Referring to FIG. 4C, the mobile terminal 400 transmits the print data "ABC.pdf" to the image forming apparatus 500 so that the image forming apparatus 500 prints the print data "ABC.pdf". The image forming apparatus 500 receives and prints the print data "ABC.pdf". To perform user authentication for image formation, the image forming apparatus 500 may also receive user identification information "Peter", mobile terminal identification information "010-1234-5678", and print data identification information "ABC.pdf" associated with the print data "ABC.pdf" from the mobile terminal 400 together with the print data "ABC.pdf" and store the same in the print data table 510.

FIG. 5 is a diagram for describing a printing method using a mobile terminal, according to another embodiment of the present invention.

Referring to FIG. 5, a system 110 for performing printing by using a mobile terminal according to an embodiment of the present invention may further include the authentication server 600 in addition to the components included in the system 100.

The authentication server 600 restricts accesses of others except for a user to print data in order to reinforce security of the print data. The authentication server 600 may be an active directory server. The active directory server may use, but is not limited to, an LDAP. The authentication server 600 may be included in the server 300 or may be an independent device separate from the server 300.

Operations S510, S515, and S520 of the system 110 of FIG. 5 are the same as the above-described operations S210, S220, and S230 of the system 100, respectively, and thus repeated descriptions thereof are omitted herein.

Referring to FIG. 5, in operations S525 and S530, the mobile terminal 400 may receive print data and user identification information from the server 300 and store the same. In operation S535, the mobile terminal 400 may transmit the received print data, the received user identification information, and mobile terminal identification information pre-stored therein to the image forming apparatus 500.

In operation S540, the image forming apparatus 500 may transmit an authentication request for image formation to the authentication server 600. At this time, the image forming apparatus 500 may transmit the received user identification information and the received mobile terminal identification information together with the authentication request to the authentication server 600.

When the authentication server 600 receives the authentication request from the image forming apparatus 500, the authentication server 600 determines whether the user is authorized, by using the user identification information and the mobile terminal identification information, in operation S545. In operation S550, the authentication server 600 transmits a result of the determination to the image forming apparatus 500.

In operation S555, when the received determination result indicates that the user is authorized, the image forming apparatus 500 prints the received print data. In operation S560, after performing image formation, the image forming apparatus 500 transmits a log signal including the mobile terminal identification information to the server 300 in order to record a result of the image formation.

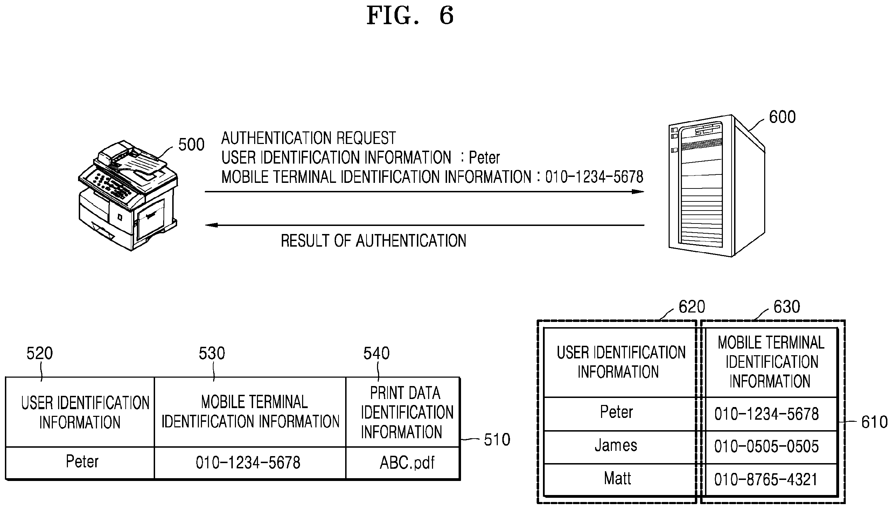

FIG. 6 is a schematic diagram for explaining a method in which the image forming apparatus 500 performs user authentication in order to perform an image forming job, according to an embodiment of the present invention.

Referring to FIG. 6, the image forming apparatus 500 may use the user identification information 520 and the mobile terminal identification information 530 of the print data table 510 in order to perform user authentication. The image forming apparatus 500 may transmit the user identification information 520 and the mobile terminal identification information 530 together with a user authentication request to the authentication server 600.

The authentication server 600 may receive the user identification information 520 and the mobile terminal identification information 530 and may use the same to determine whether the user is authorized. For example, the authentication server 600 may include an authentication table in which user identification information 620 and mobile terminal identification information 630 corresponding to the user identification information 620 are mapped with each other and recorded, and may determine whether the user is authorized by comparing the user identification information 520 and the mobile terminal identification information 530 received from the image forming apparatus 500 with the user identification information 620 and the mobile terminal identification information 630 of the authentication table 610. The authentication server 600 searches for user identification information that is the same as the received user identification information 520 from the user identification information 620 of the authentication table 610. When the received mobile terminal identification information 530 is the same as mobile terminal identification information corresponding to the found user identification information in the mobile terminal identification information 630 of the authentication table 610, the authentication server 600 determines that the user is authorized. When the user identification information that is the same as the received user identification information 520 fails to be found from the authentication table 610 or the received mobile terminal identification information 530 is different from the mobile terminal identification information corresponding to the found user identification information of the authentication table 610, the authentication server 600 determines that the user is not authentic. The authentication server 600 transmits a result of the determination to the image forming apparatus 500.

The image forming apparatus 500 receives the determination result from the authentication server 600 and prints the received print data when the received determination result indicates that the user is authorized.

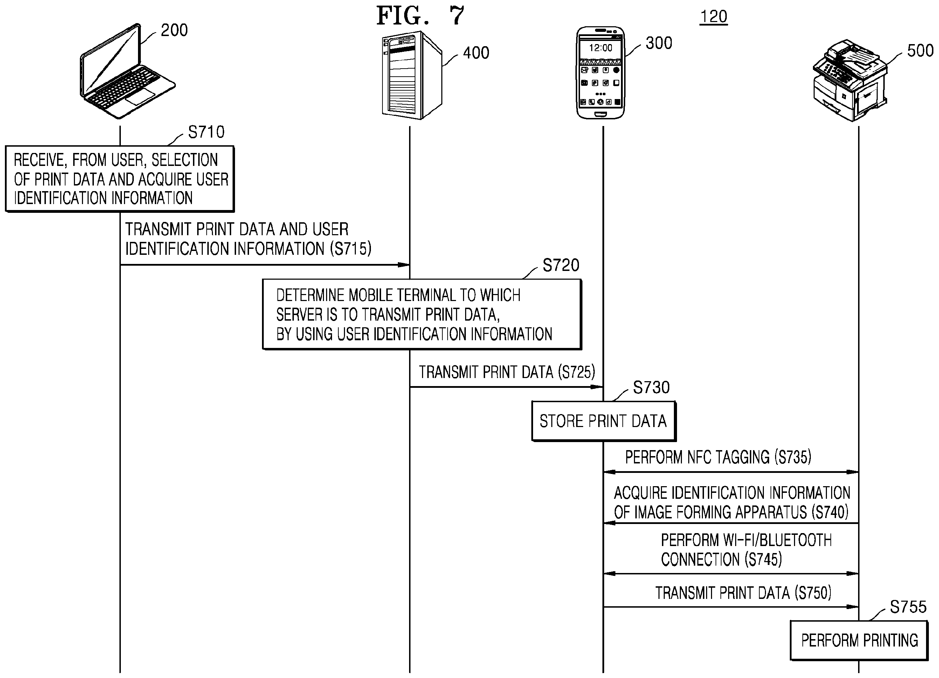

FIG. 7 is a diagram for describing a printing method using a mobile terminal, according to another embodiment of the present invention.

Operations S710, S715, S720, S725, S730, and S755 of a system 120 for performing printing by using a mobile terminal according to an embodiment of the present invention of FIG. 7 are the same as the above-described operations S210, S220, S230, S240, S250, and S270 of the system 100, respectively, and thus repeated descriptions thereof are omitted herein.

Referring to FIG. 7, the mobile terminal 400 transmits stored print data to the image forming apparatus 500 so that the image forming apparatus 500 performs image formation with respect to the print data.

The mobile terminal 400 may be set to be connected wirelessly to the image forming apparatus 500 in order to transmit the print data to the image forming apparatus 500. For example, the mobile terminal 400 may transmit or receive the print data wirelessly to or from the image forming apparatus 500 via Wi-Fi Direct or Bluetooth. The mobile terminal 400 may acquire information necessary for using Wi-Fi Direct or Bluetooth, by using an NFC function. To perform wireless communication by using an NFC function, an NFC tag and an NFC reader are required. The NFC tag may include information that is necessary for network connection between apparatuses, and the NFC reader may read out information included in the NFC tag.

The mobile terminal 400 of the system 120 may be a mobile terminal 400 having an NFC function, and the image forming apparatus 500 may be an image forming apparatus 500 having an NFC function.

When the mobile terminal 400 is tagged to the image forming apparatus 500, the NFC reader of the mobile terminal 400 may read out identification information of the image forming apparatus 500 that is stored in the NFC tag of the mobile terminal 400. The NFC tag includes image forming apparatus identification information about setting of wireless connection of the image forming apparatus 500. For example, the image forming apparatus identification information for setting of the wireless connection may include an address, a password, or the like for Wife Direct or Bluetooth connection. The mobile terminal 400 may be set to be wirelessly connected to the image forming apparatus 500 by using the address or the password.

In the system 120, the mobile terminal 400 may be set to be wirelessly connected to the image forming apparatus 500 by using an NFC function and Wi-Fi Direct or Bluetooth connection. A method of connecting the mobile terminal 400 with the image forming apparatus 500 is not limited to this embodiment.

Referring to FIG. 7, the mobile terminal 400 is tagged to the image forming apparatus 500, in operation S735. In operation S740, the mobile terminal 400 acquires identification information of the image forming apparatus 500 from the image forming apparatus 500. In operation S745, the mobile terminal 400 sets wireless connection to the image forming apparatus 500, by using the acquired identification information of the image forming apparatus 500. The wireless connection may be, but is not limited to, Wi-Fi Direct or Bluetooth connection. In operation S750, the mobile terminal 400 transmits the print data to the image forming apparatus 500, based on the set wireless connection. In operation S755, the image forming apparatus 500 receives and prints the print data.

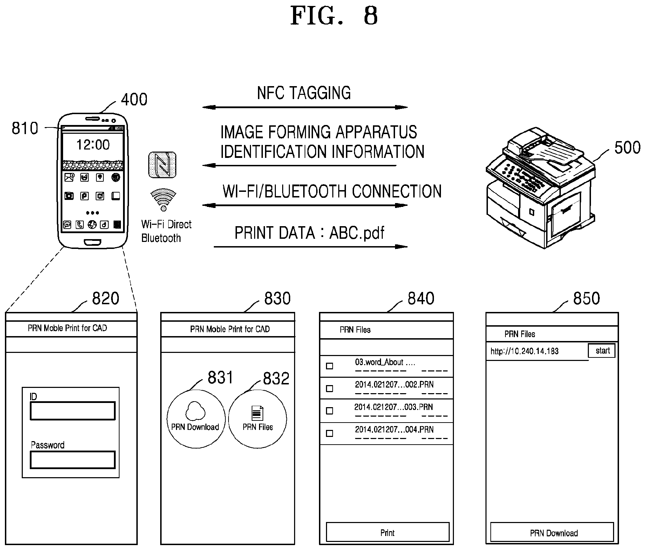

FIG. 8 is a schematic diagram for explaining a method in which the mobile terminal 400 transmits, to the image forming apparatus 500, print data that is to form an image.

Referring to FIG. 8, the mobile terminal 400 is tagged to the image forming apparatus 500 and acquires image forming apparatus identification information from the image forming apparatus 500. The mobile terminal 400 sets wireless connection to the image forming apparatus 500, by using the acquired image forming apparatus identification information. When the wireless connection is set, the mobile terminal 400 may execute an application for receiving, from a user, print data selected by the user to form an image.

During execution of the application, the mobile terminal 400 may display a user log-in screen image 820 on a display 810 of the mobile terminal 400. When user log-in is completed, the mobile terminal 400 may display a screen image 830 for retrieving print data, on the display 810 of the mobile terminal 400. The screen image 830 for retrieving a print data list may include a user interface (UI) 831 for retrieving a print data list stored in the mobile terminal 400 and a UI 832 for retrieving a print data list that is waiting in the server 300.

For example, when the UI 831 for retrieving a print data list stored in the mobile terminal 400 is selected, the mobile terminal 400 may display a print data list 840 stored therein on the display 810. When the UI 832 for retrieving a print data list waiting in the server 300 is selected, the mobile terminal 400 may display a print data list 850 waiting in the server 300 on the display 810. Alternatively, a print data list may include the print data list 840 stored in the mobile terminal 400 and the print data list 850 that is waiting in the server 300.

When the print data list is displayed, the mobile terminal 400 may receive, from a user, print data selected by the user to form an image. The mobile terminal 400 may transmit the selected print data to the image forming apparatus 500 via a connection with the image forming apparatus 500. The image forming apparatus 500 may print the print data.

Execution of the application for receiving, from the user, the print data selected by the user to form an image is not limited to the above-described execution, and the application may be executed in any of various other ways.

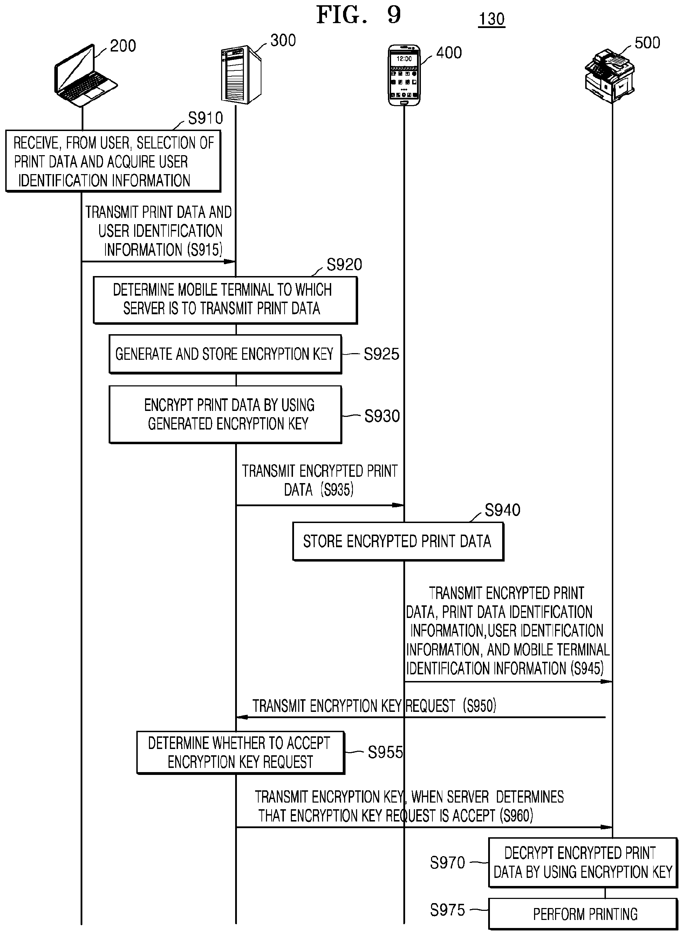

FIG. 9 is a diagram for describing a printing method using a mobile terminal, according to another embodiment of the present invention.

Referring to FIG. 9, a system 130 for performing printing by using a mobile terminal according to an embodiment of the present invention may provide print data encryption in order to reinforce security of the print data.

Operations S910, S915, and S920 of the system 130 of FIG. 9 are the same as the above-described operations S210, S220, and S230 of the system 100, respectively, and thus repeated descriptions thereof are omitted herein.

Referring to FIG. 9, to restrict accesses of other people to print data, the server 300 generates and stores an encryption key, in operation S925. In operation S930, the server 300 encrypts the print data by using the generated encryption key. For example, the server 300 may map the encryption key with print data identification information and store the mapped encryption key and the mapped print data identification information in the server data table 340. In operation S935, the server 300 transmits the encrypted print data together with print data identification information, user identification information, and mobile terminal identification information about the print data to the mobile terminal 400.

In operation S940, the mobile terminal 400 stores the encrypted print data, the print data identification information, the user identification information, and the mobile terminal identification information. In operation S945, the mobile terminal 400 transmits the encrypted print data, the print data identification information, the user identification information, and the mobile terminal identification information to the image forming apparatus 500 in order to perform an image forming job.

The image forming apparatus 500 receives the encrypted print data. In operation S950, the image forming apparatus 500 transmits an encryption key request to the server 300 in order to decrypt the encrypted print data. At this time, the image forming apparatus 500 may transmit the received user identification information, the received user identification information, and the received mobile terminal identification information together with the encryption key request to the server 300.

In operation S955, the server 300 determines to accept the encryption key request, by using the received user identification information, the received user identification information, and the received mobile terminal identification information. When the server 300 determines that the encryption key request is accepted, the server 300 transmits the encryption key stored therein to the image forming apparatus 500, in operation S960.

In operation S970, the image forming apparatus 500 decrypts the encrypted print data by using the received encryption key. In operation S975, the image forming apparatus 500 prints decrypted print data.

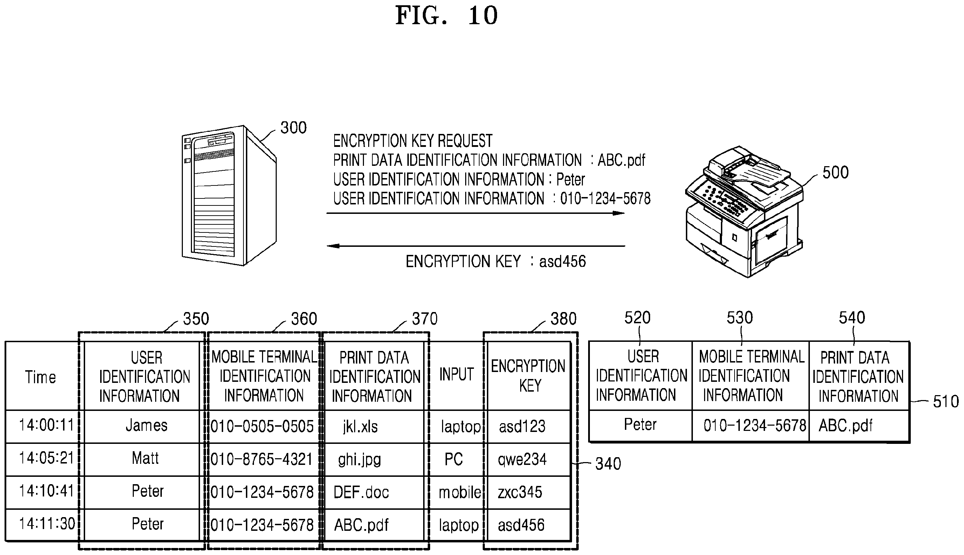

FIG. 10 is a schematic diagram for describing a method of decrypting encrypted print data, according to an embodiment of the present invention.

Referring to FIG. 10, the image forming apparatus 500 transmits to the server 300 the user identification information 520, the mobile terminal identification information 530, and the print data identification information 540 of the print data table 510 together with the encryption key request in order to decrypt the encrypted print data.

The server 300 determines whether the encryption key request is accepted, by using the user identification information 520, the mobile terminal identification information 530, and the print data identification information 540 of the print data table 510. In detail, the server 300 may include a server data table 340 including the user identification information 350, the mobile terminal identification information 360, print data identification information 370, and an encryption key 380 corresponding to each print data. In response to the encryption key request, the server 300 compares the user identification information 520, the mobile terminal identification information 530, and the print data identification information 540 of the print data table 510 with the user identification information 350, the mobile terminal identification information 360, and the print data identification information 370 of the server data table 340 to thereby determine whether to accept the encryption key request. When the user identification information 520, the mobile terminal identification information 530, and the print data identification information 540 of the print data table 510 are all identical with the user identification information 350, the mobile terminal identification information 360, and the print data identification information 370 of the server data table 340, the server 300 transmits an encryption key corresponding to the print data, which is included in the encryption key 380, to the image forming apparatus 500. When any of the user identification information 520, the mobile terminal identification information 530, and the print data identification information 540 of the print data table 510 is not identical with the user identification information 350, the mobile terminal identification information 360, and the print data identification information 370 of the server data table 340, the server 300 transmits to the image forming apparatus 500 a result of the determination indicating that the encryption key request is not accepted.

The image forming apparatus 500 decrypts the encrypted print data by using the received encryption key and prints decrypted print data.

Referring to FIG. 10, the image forming apparatus 500 transmits to the server 300 user identification information "Peter", mobile terminal identification information "010-1234-5678", and print data identification information "ABC.pdf" together with the encryption key request.

The server 300 compares the received user identification information "Peter", the received mobile terminal identification information "010-1234-5678", and the received print data identification information "ABC.pdf" with the user identification information 350, the mobile terminal identification information 360, and the print data identification information 370 of the server data table 340 to thereby determine whether to accept the encryption key request. When the received user identification information "Peter", the received mobile terminal identification information "010-1234-5678", and the received print data identification information "ABC.pdf" are all identical with the user identification information 350, the mobile terminal identification information 360, and the print data identification information 370 of the server data table 340, the server 300 transmits an encryption key "asd456" corresponding to the received print data identification information "ABC.pdf", which is included in the encryption key 380 of the server data table 340, to the image forming apparatus 500.

**The** image forming apparatus 500 decrypts the encrypted print data "ABC.pdf" by using the received encryption key "asd456" and prints decrypted print data "ABC.pdf".

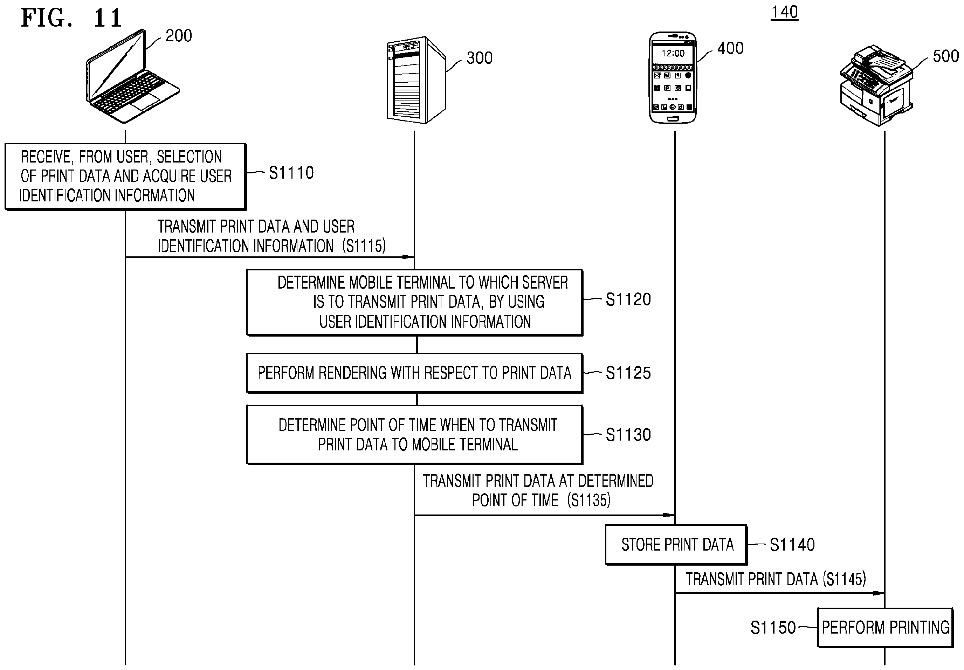

**FIG.** 11 is a diagram for describing a printing method using a mobile terminal, according to another embodiment of the present invention.

Operations S1110, S1115, S1120, S1140, S1145, and S1150 of a system 140 for performing printing by using a mobile terminal according to an embodiment of the present invention of FIG. 11 are the same as the above-described operations S210, S220, S230, S250, S260, and S270 of the system 100, respectively, and thus repeated descriptions thereof are omitted herein.

Referring to FIG. 11, in operation S1125, the server 300 may render the received print data into a file in a format supported by the image forming apparatus 500 so as to form an image thereby. For example, the computing device 100 may render print data as a PDF file, but embodiments of the present invention are not limited thereto. The computing device 100 may render the print data into a file in a format that satisfies both a file in a document format capable of being checked by a mobile terminal and a file in an output format capable of being printed by an image forming apparatus. Rendering may be performed by the computing device 200 or by another device before the print data is transmitted to the server 300, but embodiments of the present invention are not limited thereto. Rendering may be omitted if it is unnecessary.

Referring to FIG. 11, in operation S1130, the server 300 may determine a point of time when to transmit the print data to the mobile terminal 400. For example, the server 300 may determine the time point according to a server manager input or according to inputs of individual users of the print data. However, embodiments of the present invention are not limited thereto, and the time point may be determined according to any of various other methods.

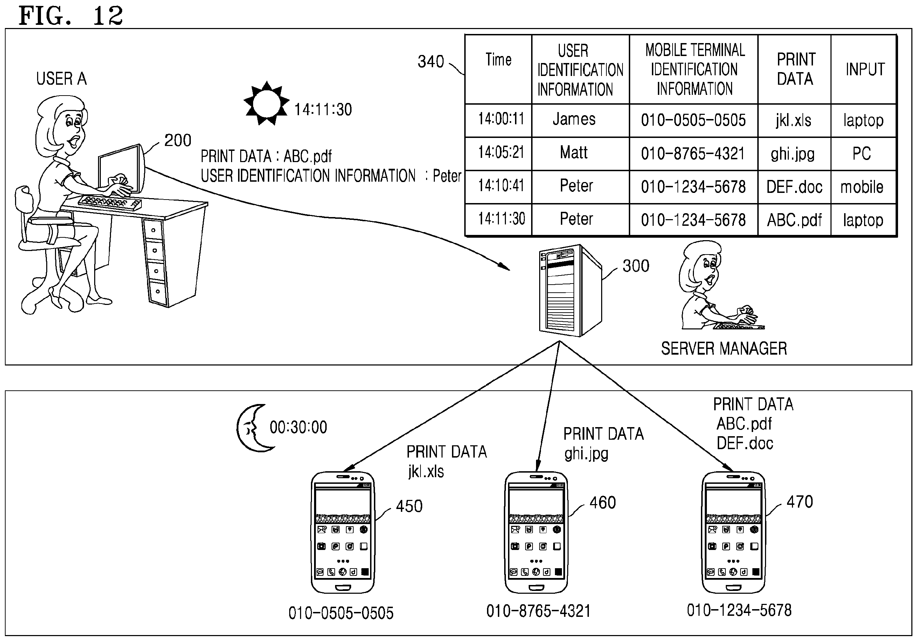

FIG. 12 is a diagram for describing a method in which the server 300 of the system 140 of FIG. 11 transmits or receives print data, according to an embodiment of the present invention.

Referring to FIG. 12, the server 300 may receive the print data from the computing device 200 and determine a point of time when to transmit the print data according to a server manager input.

For example, print data "jkl.xls" is transmitted to the server 300 at 14:00:11, print data "ghi.jpg" is transmitted to the server 300 at 14:05:21, print data "DEF.doc" is transmitted to the server 300 at 14:10:41, and print data "ABC.pdf" is transmitted to the server 300 at 14:11:30. At this time, the server 300 may determine points of time when to transmit pieces of print data, according to a server manager input. When the server 300 determines the points of time when to transmit the pieces of print data to be 00:30:00 according to a server manager input, the server 300 transmit pieces of print data to mobile terminals 400 respectively corresponding to the pieces of print data at 00:30:00.

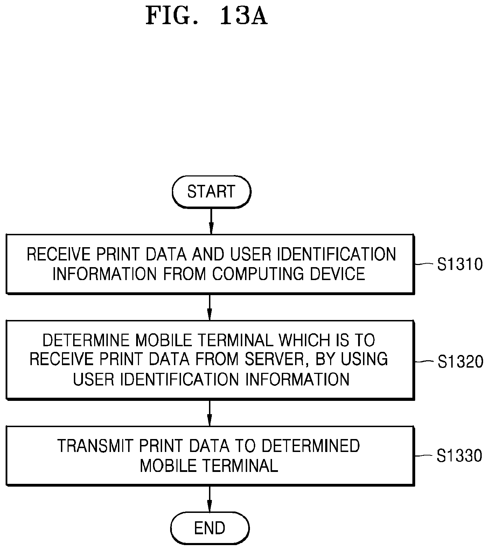

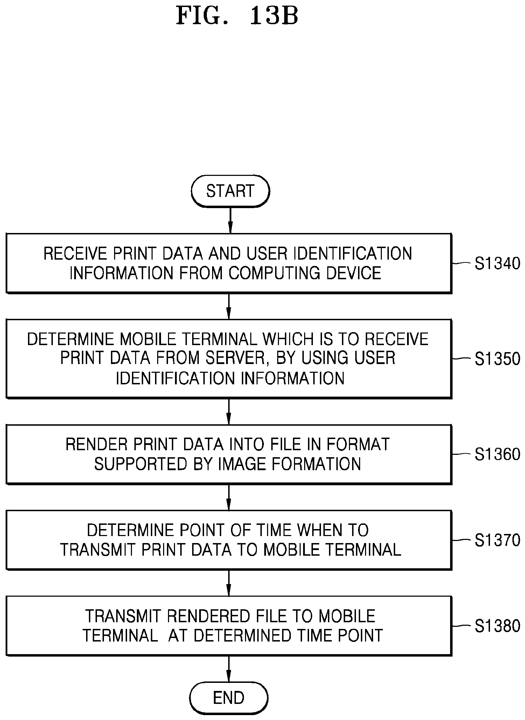

FIGS. 13A and 13B are flow charts of operations of the server 300 in a system for performing printing by using a mobile terminal according to an embodiment of the present invention.

Referring to FIG. 13A, the server 300 may receive print data and user identification information from the computing device 200, in operation S1310. In operation S1320, the server 300 may determine that a mobile terminal 400 is to receive the print data from the server 300, by using the received user identification information. When it is determined that the mobile terminal 400 is to receive the print data, the server 300 may transmit the print data to the determined mobile terminal 400, in operation S1330.

Referring to FIG. 13B, the server 300 may receive print data and user identification information from the computing device 200, in operation S1340. In operation S1350, the server 300 may determine a mobile terminal 400 which is to receive the print data from the server 300, by using the received user identification information. In operation S1360, the server 300 may render the received print data into a file in a format supported by image formation may be performed. In operation S1370, the server 300 may determine a point of time when to transmit the print data to a mobile terminal. In operation S1380, the server 300 may transmit rendered file to the mobile terminal 400 at the determined time point.

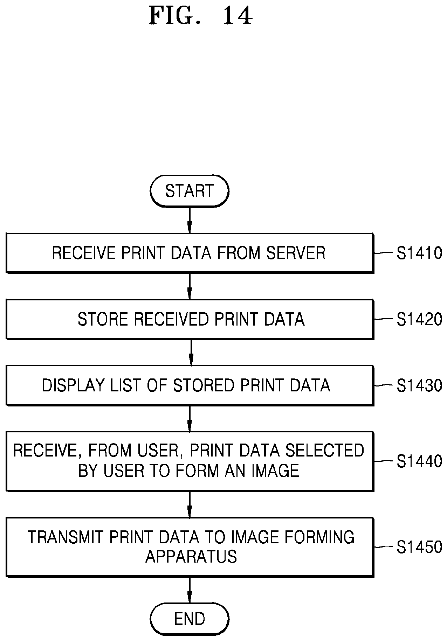

FIG. 14 is a flowchart of an operation of the mobile terminal 400 in a system for performing printing by using a mobile terminal according to an embodiment of the present invention.

Referring to FIG. 14, in operation S1410, the mobile terminal 400 may receive print data from the server 300. In operation S1420, the mobile terminal 400 may store the received print data. In operation S1430, the mobile terminal 400 may display a list of stored print data on a display of the mobile terminal 400, and may display a list of print data waiting in the server 300 on the display of the mobile terminal 400. In operation S1440, via a Ul, the mobile terminal 400 may receive, from a user, print data selected by the user to form an image. When print data is selected, the mobile terminal 400 may transmit the print data to the image forming apparatus 500, in operation S1450.

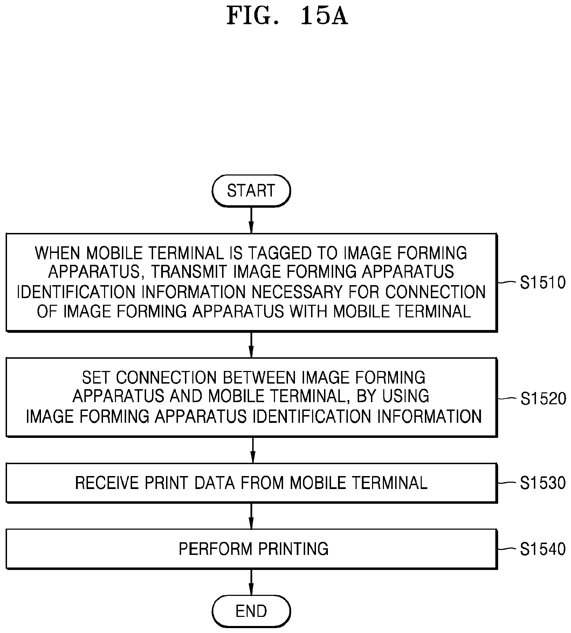

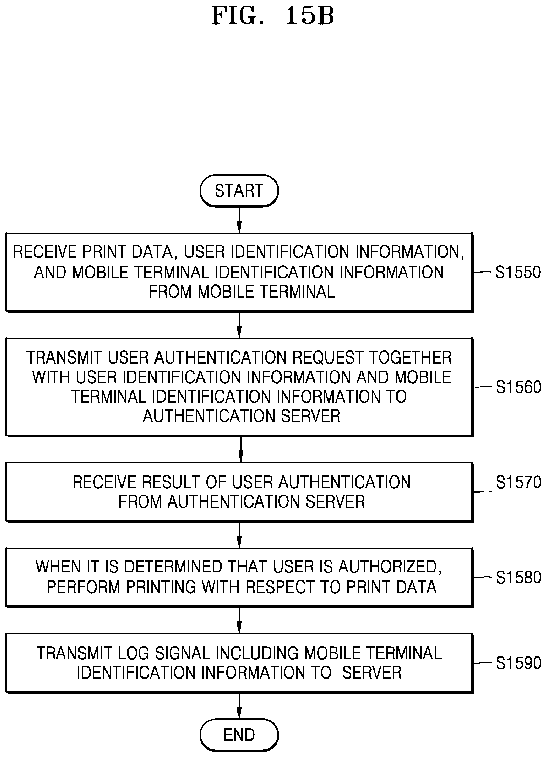

FIGS. 15A and 15B are flow charts of operations of the image forming apparatus 500 in a system for performing printing by using a mobile terminal according to an embodiment of the present invention.

Referring to FIG. 15A, when the mobile terminal 400 is tagged to the image forming apparatus 500, the image forming apparatus 500 may transmit image forming apparatus identification information necessary for connection of the image forming apparatus 500 with the mobile terminal 400, in operation S1510. In operation S1520, connection between the image forming apparatus 500 and the mobile terminal 400 may be set by using the image forming apparatus identification information. When the connection is set, the image forming apparatus 500 may receive the print data from the mobile terminal 400, in operation S1530. In operation S1540, the image forming apparatus 500 may print the received print data.

Referring to FIG. 15B, the image forming apparatus 500 may receive print data, user identification information, and mobile terminal identification information from a mobile terminal, in operation S1550. In operation S1560, the image forming apparatus 500 may transmit a user authentication request together with the user identification information and the mobile terminal identification information to the authentication server 600, in order to perform user authentication, in operation S1560. According to a determination of the authentication server 600, the image forming apparatus 500 may receive a result of the user authentication from the authentication server 600, in operation S1570. When it is determined that a user is authorized, the image forming apparatus 500 may print the received print data, in operation S1580. When image formation is completed, the image forming apparatus 500 may transmit a log signal including the mobile terminal identification information to the server 300 in order to record a result of the image formation, in operation S1590.

FIGS. 16A-16E are block diagrams of respective structures of devices that constitute a system for performing printing by using a mobile terminal according to an embodiment of the present invention.

The system for performing printing by using a mobile terminal according to an embodiment of the present invention includes a computing device 200, a server 300, a mobile terminal 400, and an image forming apparatus 500. The system for performing printing by using a mobile terminal according to an embodiment of the present invention may further include the authentication server 600.

FIG. 16A is a block diagram of a structure of the computing device 200, according to an embodiment of the present invention.

Referring to FIG. 16A, the computing device 200 includes a controller 201 and a communicator 202.

The controller 201 may include a central processing unit (CPU) to control an overall operation of the computing device 200.

The communicator 202 is configured to transmit or receive data to or from an external apparatus via wired or wireless communication. The computing device 200 may transmit print data and user identification information to the server 300 via the communicator 202.

FIG. 16B is a block diagram of a structure of the server 300, according to an embodiment of the present invention.

Referring to FIG. 16B, the server 300 may include a communicator 301, a storage unit 302, a printer driver 303, a scheduler 304, an encryption unit 305, and a controller 306.

The communicator 301 is configured to transmit or receive data to or from an external apparatus via wired or wireless communication. The server 300 may receive print data and user identification information via the communicator 301 and may transmit the print data to the mobile terminal 400 via the communicator 301. The server 300 may receive the user identification information, mobile terminal identification information, and print data identification information to the mobile terminal 400 via the communicator 301. The server 300 may receive an encryption key request from the image forming apparatus 500 via the communicator 301 and may receive a log signal via the communicator 301 when image formation is completed.

The storage unit 302 may include volatile memory, such as RAM, non-volatile memory, such as ROM, a hard disk drive (HDD), or a solid state drive (SSD).

The storage unit 302 may pre-store the mapping table 310 in which the user identification information 320 and the mobile terminal identification information 330 are mapped with each other and recorded. The mapping table 310 may be generated via batch registration of a server manager, may be read from an authentication server such as an LDAP, or may be generated via individual registrations of users. Embodiments of the present invention are not limited thereto, and the mapping table 310 may be obtained by using any of various other methods.

After the print data is transmitted to the mobile terminal 400, the storage unit 302 may store user identification information, mobile terminal identification information, and print data identification information associated with the transmitted print data. For example, the storage unit 302 may store the server data table 340 in which the user identification information 350, the mobile terminal identification information 360, and the print data identification information are mapped with one another and recorded. The server data table 340 may further include, for example, information about time points at which the server 300 has received print data and information about the identities of computing devices 200 which have transmitted the print data.

When an image forming job is completed, the storage unit 302 may store a log signal received from the image forming apparatus 500. The log signal indicates a result of the image forming job, and may include mobile terminal identification information corresponding to the print data. The storage unit 302 may store the log signal in the server data table 340.

The printer driver 303 is configured to render the print data. In detail, the printer driver 303 renders the print data into a file in a format supported by the image forming apparatus 500 so as to form an image thereby. In detail, the printer driver 303 may transform objects included in the print data into a raw image by performing rendering with respect to the objects, transform the raw image into an image format file such as a JPEG file, and generate a printable format file including the image format file, for example, a PDF file.

The scheduler 304 is configured to determine a point of time when to transmit the print data to the mobile terminal 400. The scheduler 304 may determine the time point according to a server manager input or according to inputs of individual users of the print data. However, embodiments of the present invention are not limited thereto, and the time point may be determined according to any of various other methods.

The encryption unit 305 encrypts the print data in order to prevent access to the print data by others. The encryption unit 305 generates an encryption key of the print data, maps the encryption key with the print data identification information, and stores the mapped encryption key and the mapped print data identification information in the server data table 340. The encryption unit 305 encrypts the print data by using the generated encryption key.

The controller 306 may include a CPU to control an overall operation of the server 300.

The controller 306 may determine that a mobile terminal 400 is to receive the print data from the server 300, by referring to the pre-stored mapping table 310. For example, the controller 306 may obtain the mobile terminal identification information 330 by comparing the user identification information received from the computing device 200 with the user identification information 320 of the mapping table 310, and may determine that the mobile terminal 400 is to receive the print data from the server 300.

The controller 306 may determine whether to accept an encryption key request of the image forming apparatus 500. For example, when the server 300 receives the encryption key request together with the user identification information, the mobile terminal identification information, and the print data identification information from the image forming apparatus 500 via the communicator 301, the controller 306 may determine whether to accept the encryption key request, by using the received user identification information, the received mobile terminal identification information, and the received print data identification information.

In detail, the controller 306 may determine whether to accept the encryption key request, by comparing the received user identification information, the received mobile terminal identification information, and the received print data identification information with the user identification information 350, the mobile terminal identification information 360, and the print data identification information 370 of the pre-stored server data table 340. When the received user identification information, the received mobile terminal identification information, and the received print data identification information are all identical with the user identification information 350, the mobile terminal identification information 360, and the print data identification information 370 of the pre-stored server data table 340, the controller 306 may control an encryption key corresponding to the received print data identification information, which is included in the encryption key 380, to be transmitted to the image forming apparatus 500 via the communicator 301.

FIG. 16C is a block diagram of a structure of the mobile terminal 400, according to an embodiment of the present invention.

Referring to FIG. 16C, the mobile terminal 400 may include a communicator 401, a storage unit 402, a UI unit 403, a display 404, and a controller 405.

The communicator 401 is configured to transmit or receive data to or from an external apparatus via wired or wireless communication. The communicator 401 may include a Wi-Fi chip, a Bluetooth chip, a wireless communication chip, an NFC chip, and the like. The Wi-Fi chi and the Bluetooth chip may perform communication according to a Wi-Fi method and a Bluetooth method, respectively. When using a Wi-Fi chi or a Bluetooth chip, the communicator 401 may first transmit or receive connection information, such as image forming apparatus identification information, to or from the external apparatus, communicate with the external apparatus by using the connection information, and then transmit or receive print data to or from the external apparatus.

The wireless communication chip is a chip that performs communication according to any of various communication standards, such as, IEEE, ZigBee, 3rd generation (3G), 3rd generation partnership project (3GPP), and long term evolution (LTE). The NFC chip is a chip operating according to an NFC method that uses a 13.56MHz frequency band from among various radio frequency (RF)-identification (ID) frequency chips, such as, 135 kHz, 13.56 MHz, 433 MHz, 860 to 960 MHz, and 2.45 GHz.

The mobile terminal 400 may receive print data via the communicator 401 and transmit the print data to the image forming apparatus 500 via the communicator 401. The mobile terminal 400 may set wireless connection to the image forming apparatus 500 via the communicator 401, in order to transmit the print data to the image forming apparatus 500. For example, the mobile terminal 400 may transmit or receive the print data wirelessly to or from the image forming apparatus 500 via the communicator 401, by using Wi-Fi Direct or Bluetooth. The mobile terminal 400 may acquire information necessary for using Wi-Fi Direct or Bluetooth, by using an NFC function of the communicator 401.

For example, when the mobile terminal 400 is tagged to the image forming apparatus 500, the mobile terminal 400 may acquire the image forming apparatus identification information from the image forming apparatus 500 via an NFC chip of the communicator 401 in order to set the wireless connection, and may set the wireless connection with the image forming apparatus 500 by using the acquired image forming apparatus identification information. When the wireless connection is set, the mobile terminal 400 may transmit the print data to the image forming apparatus 500 via the communicator 401.

The storage unit 402 may include volatile memory, such as RAM, non-volatile memory, such as ROM, an HDD, or an SSD.

The storage unit 402 may store the print data received from the server 300. The storage unit 402 may include a security area to store print data. For example, the security area may be a container that is physically totally separate from a normal area on an application layer in an Android system. For example, by storing the print data in the security area such as a container, access to the print data by others than the user of the mobile terminal 400 may be restricted, and access to the mobile terminal 400 by a hacking application and the like may be restricted.

The storage unit 402 may pre-store the mobile terminal identification information 430. The store unit 402 may receive user identification information, print data identification information, print data time information, and computing device identification information about the print data together with the print data from the server 300 and may store the received information. For example, the storage unit 402 may include the mobile terminal table 410 in which the pre-stored mobile terminal identification information 430 is mapped with the user identification information and the print data identification information received from the server 300. The mobile terminal table 410 may further include print data time information and computing device identification information.

The UI unit 403 provides information to a user and receives an input of the user, and may include a monitor, a keyboard, a touch screen, and the like. The UI unit 403 may provide the user log-in screen image 820 for user log-in to the user and may receive user identification information input by the user in order to perform the user log-in. The UI unit 403 may provide the user with the screen image 830 for retrieving a print data list, and may receive a selection of a print data list stored in the mobile terminal 400 or a print data list waiting in the server 300 that is made by the user so that the selected print data list is displayed.

According to the selection of the user, the UI unit 403 may provide the print data list 840 stored in the mobile terminal 400, the print data list 850 waiting in the server 300, or a combination thereof to the user, and may receive a selection of print data which is to form an image from the user. The UI unit 403 may display the screen images 820 through 850 on the display 404 so that the print data list 840 stored in the mobile terminal 400, the print data list 850 waiting in the server 300, or a combination thereof is provided to the user.

The controller 405 may include a CPU to control an overall operation of the mobile terminal 400.

FIG. 16D is a block diagram of a structure of the image forming apparatus 500, according to an embodiment of the present invention.

Referring to FIG. 16D, the image forming apparatus 500 may include a communicator 501, a storage unit 502, a decryption unit 503, an image forming unit 504, and a controller 505.

The communicator 501 is configured to transmit or receive data to or from an external apparatus via wired or wireless communication. The communicator 501 may include a Wi-Fi chip, a Bluetooth chip, a wireless communication chip, an NFC chip, and the like.

The image forming apparatus 500 may receive the print data from the mobile terminal 400 via the communicator 501. When the mobile terminal 400 is tagged to the image forming apparatus 500, the image forming apparatus 500 may transmit the image forming apparatus identification information to the mobile terminal 400 via an NFC chip of the communicator 501 in order to set the wireless connection with the mobile terminal 400. When the wireless connection is set, the image forming apparatus 500 may receive the print data from the mobile terminal 400.

The image forming apparatus 500 may transmit a user authentication request to the authentication server 600 via the communicator 501. At this time, the image forming apparatus 500 may transmit user identification information and mobile terminal identification information together with the user authentication request to the authentication server 600 via the communicator 501. The image forming apparatus 500 may receive a result of the user authentication from the authentication server 600 via the communicator 501.

The image forming apparatus 500 may transmit an encryption key request to the server 300 via the communicator 501. At this time, the image forming apparatus 500 may transmit the user identification information, the mobile terminal identification information, and print data identification information together with the encryption key request to the server 300 via the communicator 501. When the encryption key request is accepted, the image forming apparatus 500 may receive an encryption key from the server 300 via the communicator 501.

The image forming apparatus 500 may transmit a log signal including the mobile terminal identification information to the server 300 via the communicator 501 in order to record a result of the image formation.

The storage unit 502 may include volatile memory, such as RAM, non-volatile memory, such as ROM, an HDD, or an SSD. The storage unit 502 may receive the user identification information, the mobile terminal identification information, and the print data identification information from the mobile terminal 400 and store the same. For example, the storage unit 502 may include the print data table 510 in which the user identification information 520, the mobile terminal identification information 530, and the print data identification information 540 are mapped with one another and recorded.

The decryption unit 503 decrypts encrypted print data. The decryption unit 503 decrypts the encrypted print data by using the encryption key received from the server 300.

The image forming unit 504 prints the print data. Types of image formation may include printing, copying, scanning, faxing, and the like. The image forming unit 504 may print the print data received from the mobile terminal 400.

The controller 505 may include a CPU to control an overall operation of the image forming apparatus 500.

FIG. 16E is a block diagram of a structure of the authentication server 600, according to an embodiment of the present invention.

Referring to FIG. 16E, the authentication server 600 may include a communicator 601, a storage unit 602, and a controller 603.

The communicator 601 is configured to transmit or receive data to or from an external apparatus via wired or wireless communication. The authentication server 600 may receive a user authentication request from the image forming apparatus 500 via the communicator 601. The authentication server 600 may also receive user identification information and mobile terminal identification information together with the user authentication request via the communicator 601. The authentication server 600 may transmit a result of the user authentication to the image forming apparatus 500 via the communicator 601.

The storage unit 602 may include volatile memory, such as RAM, non-volatile memory, such as ROM, an HDD, or an SSD.

The storage unit 602 may pre-store the authentication table 610 in which the user identification information 620 and the mobile terminal identification information 630 are mapped with each other and recorded.

The controller 603 may include a CPU to control an overall operation of the authentication server 600.

As described above, according to the one or more of the above embodiments of the present invention, a system for performing printing, including a computing device, a server, a mobile terminal, and an image forming apparatus, reduces traffic of an internal network of the system by using the mobile terminal, compared with existing systems for performing printing. Moreover, since print data is directly transmitted to the mobile terminal without being stored in the server, security of the print data may be reinforced.

The exemplary embodiments should be considered in descriptive sense only and not for purposes of limitation. Descriptions of features or aspects within each embodiment should typically be considered as available for other similar features or aspects in other embodiments.

While the present invention has been particularly shown and described with reference to exemplary embodiments thereof, it will be understood by those of ordinary skill in the art that various changes in form and details may be made therein without departing from the scope of the present invention as defined by the following claims.

All of the features disclosed in this specification (including any accompanying claims, abstract and drawings), and/or all of the steps of any method or process so disclosed, may be combined in any combination, except combinations where at least some of such features and/or steps are mutually exclusive.

## Claims

1. A system (100) for performing printing by using a mobile terminal (400), the system (100) comprising:
a computing device (200) which transmits print data and user identification information to a server (300);
the server (300) which determines a mobile terminal (400) of a user to which the server (300) is to transmit the print data, by using the user identification information, and transmits the print data to the determined mobile terminal (400) via a system network of the system (100); further comprising the mobile terminal (400) which stores the received print data and is configured to set a short-range wireless communication with an image forming apparatus (500); and
the image forming apparatus (500) which receives the print data from the mobile terminal (400) via the short-range wireless communication, and prints the received print data.

2. The system of claim 1, further comprising an authentication server (600) which receives a user authentication request, the user identification information, and identification information of the determined mobile terminal (400) from the image forming apparatus (500), determines whether the user is authorized, based on the user identification information and the mobile terminal identification information, and transmits a result of the determination to the image forming apparatus (500).

3. The system of claim 1 or claim 2, wherein the mobile terminal (400),
when the mobile terminal (400) is near field communication (NFC)-tagged to the image forming apparatus (500) that supports NFC, receives identification information of the NFC-tagged image forming apparatus (500) necessary for short-range wireless communication with the NFC-tagged image forming apparatus,
sets the short-range wireless communication with the image forming apparatus (500) by using the identification information of the NFC-tagged image forming apparatus (500).

4. The system of any preceding claim, wherein
the server (300) generates and stores an encryption key for the print data and encrypts the print data by using the encryption key, and
the image forming apparatus (300) transmits print data identification information, user identification information, and mobile terminal identification information together with a request for the encryption key to the server (300) in order to decrypt the encrypted print data, receives the encryption key from the server (300) when the server (300) determines that the request for the encryption key is accepted, and decrypts the encrypted print data by using the encryption key in order to form an image.

5. The system of any preceding claim, wherein the server (300) sets a point of time when to transmit the print data to the mobile terminal (400) and transmits the print data to the mobile terminal (400) at the set point of time.

6. The system of any preceding claim, wherein the server (300) renders the print data into a file in a format that is supported by the image forming apparatus (500), and transmits the file.

7. The system of any preceding claim, wherein the mobile terminal (400) stores the print data in a security area of the mobile terminal (400).

8. The system of any preceding claim, wherein the server (300) includes a mapping table (310) in which the user identification information is mapped with mobile terminal identification information corresponding to the user identification information, and determines the mobile terminal (400) to which the server (300) is to transmit the print data, by referring to the mapping table (310).

9. The system of any preceding claim, wherein the mobile terminal (400) and the image forming apparatus (500) both support a role as an access point (AP) for providing connection between clients in a wireless communication environment and a role as one client.

10. A non-transitory computer-readable recording medium having recorded thereon a computer program, which, when executed by a computer, performs the method of one of claims 11-19.

11. A printing method using a mobile terminal (400), the printing method comprising:
transmitting print data and user identification information from a computing device (200) to a server (300);
determining a mobile terminal (400) of a user to which the server (300) is to transmit the print data, by using the user identification information; whereby:
transmitting the print data to the determined mobile terminal (400) via a system network of the system (100);
storing the print data in the mobile terminal (400);
setting a short-range wireless communication between the mobile terminal (400) and an image forming apparatus (500);
transmitting the print data from the mobile terminal (400) to the image forming apparatus (500) via the short-range wireless communication; and
printing the print data.

12. The printing method of claim 11, wherein
the transmitting of the print data from the mobile terminal (400) to the image forming apparatus (500) further comprises transmitting identification information of the mobile terminal (400) to the image forming apparatus (500), and
the printing of the print data comprises:
transmitting a user authentication request, the user identification information, and the mobile terminal identification information from the image forming apparatus (500) to an authentication server (600) located inside or outside the server (300);
determining whether the user is authorized, based on the user identification information and the mobile terminal identification information;
transmitting a result of the determination to the image forming apparatus (500); and
printing the print data when it is determined that the user is authorized.

13. The printing method of claim 11 or claim 12, wherein the transmitting of the print data from the mobile terminal (400) to the image forming apparatus (500) comprises:
when the image forming apparatus (500) that supports NFC is tagged by the mobile terminal (400), receiving identification information of the image forming apparatus (500) that is necessary for short-range wireless communication with the image forming apparatus (500), wherein the receiving is performed by the mobile terminal (400); and
setting the short-range wireless communication with the image forming apparatus (500) by using the identification information of the image forming apparatus (500).

14. The printing method of any one of claims 11 to 13, wherein
the transmitting of the print data to the determined mobile terminal (400) comprises:
generating and storing an encryption key for the print data;
encrypting the print data by using the encryption key; and
transmitting the encrypted print data to the mobile terminal (400),
the printing of the print data comprises:
receiving the encrypted print data from the mobile terminal (400);
transmitting, to the server (300), print data identification information, user identification information, and mobile terminal identification information, together with a request for the encryption key, in order to decrypt the encrypted print data;
receiving the encryption key from the server (300) when the server (300) determines that the request for the encryption key is accepted;
decrypting the encrypted print data by using the encryption key; and
printing the decrypted print data.

15. The printing method of any one of claims 11 to 14, wherein the transmitting of the print data to the determined mobile terminal (400) comprises:
setting a point of time when to transmit the print data to the mobile terminal (400); and
transmitting the print data to the mobile terminal (400) at the set point of time.

16. The printing method of any one of claims 11 to 15, wherein the transmitting of the print data to the determined mobile terminal (400) comprises:
rendering the print data into a file in a format supported by the image forming apparatus (500); and
transmitting the rendered file to the mobile terminal (400).

17. The printing method of any one of claims 11 to 16, wherein the storing of the print data in the mobile terminal (400) comprises storing the print data in a security area of the mobile terminal (400).

18. The printing method of any one of claims 11 to 17, wherein the determining of the mobile terminal (400) of the user to which the server (300) is to transmit the print data comprises determining the mobile terminal (400) of the user to which the server (300) is to transmit the print data, by referring to a mapping table (310) in which the user identification information is mapped with mobile terminal identification information corresponding to the user identification information.

19. The printing method of any one of claims 11 to 18, wherein the transmitting of the print data from the mobile terminal (400) to the image forming apparatus (500) comprises:
displaying a list of the stored print data on a display of the mobile terminal (400);
receiving a selection of the print data which is to form an image, from the user; and
transmitting the selected print data to the image forming apparatus (500).

20. The system of any one of claims 1-9 or the printing method of any one of claims 11-19, wherein the short-range wireless communication comprises a communication by using one of near field communication, NFC, Wi-Fi Direct and Bluetooth.

## Patentansprüche

1. System (100) zum Durchführen von Druckvorgängen unter Verwendung eines mobilen Endgeräts (400), wobei das System (100) umfasst:
eine Rechenvorrichtung (200), die Druckdaten und Anwenderidentifikationsinformationen an einen Server (300) übermittelt;
den Server (300), der ein mobiles Endgerät (400) eines Anwenders, an das der Server (300) die Druckdaten übermitteln soll, unter Verwendung der Anwenderidentifikationsinformationen, bestimmt und die Druckdaten an das bestimmte mobile Endgerät (400) über ein Systemnetzwerk des Systems (100) übermittelt;
ferner umfassend das mobile Endgerät (400), das die empfangenen Druckdaten speichert und so eingerichtet ist, eine drahtlose Kurzstreckenkommunikation mit einem Bilderzeugungsgerät (500) einzurichten; und
das Bilderzeugungsgerät (500), das die Druckdaten von dem mobilen Endgerät (400) über die drahtlose Kurzstreckenkommunikation empfängt und die empfangenen Druckdaten druckt.

2. System nach Anspruch 1, ferner umfassend einen Authentifizierungsserver (600), der eine Anwenderauthentifizierungsanforderung, die Anwenderidentifizierungsinformationen und Identifizierungsinformationen des bestimmten mobilen Endgeräts (400) von dem Bilderzeugungsgerät (500) empfängt, bestimmt, ob der Anwender autorisiert ist, basierend auf den Anwenderidentifizierungsinformationen und den mobilen Endgeräteidentifizierungsinformationen und ein Ergebnis der Bestimmung an das Bilderzeugungsgerät (500) übermittelt.

3. System nach Anspruch 1 oder Anspruch 2, wobei das mobile Endgerät (400),
wenn das mobile Endgerät (400) mit dem Bilderzeugungsgerät (500), das NFC unterstützt, Nahfeldkommunikations-(NFC)-markiert ist, Identifikationsinformationen des NFC-markierten Bilderzeugungsgeräts (500) empfängt, die für die drahtlose Kurzstreckenkommunikation mit dem NFC-markierten Bilderzeugungsgerät erforderlich sind,
die drahtlose Kurzstreckenkommunikation mit dem Bilderzeugungsgerät (500) unter Verwendung der Identifikationsinformationen des NFC-markierten Bilderzeugungsgeräts (500) einrichtet.

4. System nach einem vorhergehenden Anspruch, wobei
der Server (300) einen Verschlüsselungsschlüssel für die Druckdaten erzeugt und speichert und die Druckdaten unter Verwendung des Verschlüsselungsschlüssels verschlüsselt und
das Bilderzeugungsgerät (300) Druckdatenidentifizierungsinformationen, Anwenderidentifizierungsinformationen und Identifizierungsinformationen für mobile Endgeräte zusammen mit einer Anfrage für den Verschlüsselungsschlüssel an den Server (300) übermittelt, um die verschlüsselten Druckdaten zu entschlüsseln, den Verschlüsselungsschlüssel vom Server (300) empfängt, wenn der Server (300) bestimmt, dass die Anfrage für den Verschlüsselungsschlüssel akzeptiert wird und die verschlüsselten Druckdaten unter Verwendung des Verschlüsselungsschlüssels entschlüsselt, um ein Bild zu erzeugen.

5. System nach einem vorhergehenden Anspruch, wobei der Server (300) einen Zeitpunkt festlegt, zu dem die Druckdaten an das mobile Endgerät (400) zu übermitteln sind und die Druckdaten zu dem festgelegten Zeitpunkt an das mobile Endgerät (400) übermittelt.

6. System nach einem vorhergehenden Anspruch, wobei der Server (300) die Druckdaten in eine Datei in einem Format rendert, das von dem Bilderzeugungsgerät (500) unterstützt wird und die Datei übermittelt.

7. System nach einem vorhergehenden Anspruch, wobei das mobile Endgerät (400) die Druckdaten in einem Sicherheitsbereich des mobilen Endgeräts (400) speichert.

8. System nach einem vorhergehenden Anspruch, wobei der Server (300) eine Zuordnungstabelle (310) beinhaltet, in der die Anwenderidentifikationsinformationen mit Identifikationsinformationen für mobilen Endgeräte, die den Anwenderidentifikationsinformationen entsprechen, zugeordnet sind und das mobile Endgerät (400) bestimmt, an das der Server (300) die Druckdaten übermitteln soll, unter Bezugnahme auf die Zuordnungstabelle (310).

9. System nach einem vorhergehenden Anspruch, wobei das mobile Endgerät (400) und das Bilderzeugungsgerät (500) beide eine Rolle als Zugangspunkt (AP) zum Bereitstellen einer Verbindung zwischen Klienten in einer drahtlosen Kommunikationsumgebung und eine Rolle als ein Klient unterstützen.

10. Nichttransitorisches, computerlesbares Aufzeichnungsmedium, auf dem ein Computerprogramm aufgezeichnet ist, das, wenn es von einem Computer ausgeführt wird, das Verfahren eines der Ansprüche 11-19 ausführt.

11. Druckverfahren unter Verwendung eines mobilen Endgeräts (400), wobei das Druckverfahren umfasst:
Übermitteln von Druckdaten und Anwenderidentifikationsinformationen von einer Rechenvorrichtung (200) an einen Server (300);
Bestimmen eines mobilen Endgeräts (400) eines Anwenders, an den der Server (300) die Druckdaten übermitteln soll, unter Verwendung der Anwenderidentifikationsinformationen;
wobei:
Übermitteln der Druckdaten an das bestimmte mobile Endgerät (400) über ein Systemnetzwerk des Systems (100);
Speichern der Druckdaten in dem mobilen Endgerät (400);
Einrichten einer drahtlosen Kurzstreckenkommunikation zwischen dem mobilen Endgerät (400) und einem Bilderzeugungsgerät (500);
Übermitteln der Druckdaten von dem mobilen Endgerät (400) an das Bilderzeugungsgerät (500) über die drahtlose Kurzstreckenkommunikation; und
Drucken der Druckdaten.

12. Druckverfahren nach Anspruch 11, wobei
das Übermitteln der Druckdaten von dem mobilen Endgerät (400) an das Bilderzeugungsgerät (500) ferner das Übermitteln von Identifikationsinformationen des mobilen Endgeräts (400) an das Bilderzeugungsgerät (500) umfasst, und
das Drucken der Druckdaten umfasst:
Übermitteln einer Anwenderauthentifizierungsanforderung, der Anwenderidentifizierungsinformationen und der Identifikationsinformationen des mobilen Endgeräts von dem Bilderzeugungsgerät (500) an einen Authentifizierungsserver (600), der innerhalb oder außerhalb des Servers (300) angeordnet ist;
Bestimmen, ob der Anwender autorisiert ist, basierend auf den Anwenderidentifizierungsinformationen und den Identifikationsinformationen des mobilen Endgeräts;
Übermitteln eines Ergebnisses der Bestimmung an das Bilderzeugungsgerät (500); und
Drucken der Druckdaten, wenn bestimmt wird, dass der Anwender autorisiert ist.

13. Druckverfahren nach Anspruch 11 oder Anspruch 12, wobei das Übermitteln der Druckdaten von dem mobilen Endgerät (400) an das Bilderzeugungsgerät (500) umfasst:
wenn das NFC-unterstützende Bilderzeugungsgerät (500) durch das mobile Endgerät (400) markiert ist, Empfangen von Identifizierungsinformationen des Bilderzeugungsgeräts (500), die für die drahtlose Kurzstreckenkommunikation mit dem Bilderzeugungsgerät (500) erforderlich sind, wobei das Empfangen durch das mobile Endgerät (400) durchgeführt wird; und
Einrichten der drahtlosen Kurzstreckenkommunikation mit dem Bilderzeugungsgerät (500) unter Verwendung der Identifikationsinformationen des Bilderzeugungsgeräts (500).

14. Druckverfahren nach einem der Ansprüche 11 bis 13, wobei
die Übertragung der Druckdaten an das bestimmte mobile Endgerät (400) umfasst:
Generieren und Speichern eines Verschlüsselungsschlüssels für die Druckdaten;
Verschlüsseln der Druckdaten unter Verwendung des Verschlüsselungsschlüssels; und
Übermitteln der verschlüsselten Druckdaten an das mobile Endgerät (400),
wobei das Drucken der Druckdaten umfasst:
Empfangen der verschlüsselten Druckdaten von dem mobilen Endgerät (400);
Übertragen, an den Server (300), der Druckdaten-Identifizierungsinformationen, Anwenderidentifizierungsinformationen und Identifizierungsinformationen für mobile Endgeräte zusammen mit einer Anfrage für den Verschlüsselungsschlüssel, um die verschlüsselten Druckdaten zu entschlüsseln;
Empfangen des Verschlüsselungsschlüssels vom Server (300), wenn der Server (300) bestimmt, dass die Anfrage für den Verschlüsselungsschlüssel akzeptiert wird;
Entschlüsseln der verschlüsselten Druckdaten unter Verwendung des Verschlüsselungsschlüssels; und
Drucken der entschlüsselten Druckdaten.

15. Druckverfahren nach einem der Ansprüche 11 bis 14, wobei das Übertragen der Druckdaten an das bestimmte mobile Endgerät (400) umfasst:
Festlegen eines Zeitpunkts, zu dem die Druckdaten an das mobile Endgerät (400) zu übermitteln sind; und
Übermitteln der Druckdaten zu dem festgelegten Zeitpunkt an das mobile Endgerät (400).

16. Druckverfahren nach einem der Ansprüche 11 bis 15, wobei das Übertragen der Druckdaten an das bestimmte mobile Endgerät (400) umfasst:
Rendern der Druckdaten in eine Datei in einem von dem Bilderzeugungsgerät unterstützten Format (500); und
Übermitteln der gerenderten Datei an das mobile Endgerät (400).

17. Druckverfahren nach einem der Ansprüche 11 bis 16, wobei das Speichern der Druckdaten in dem mobilen Endgerät (400) das Speichern der Druckdaten in einem Sicherheitsbereich des mobilen Endgeräts (400) umfasst.

18. Druckverfahren nach einem der Ansprüche 11 bis 17, wobei das Bestimmen des mobilen Endgeräts (400) des Anwenders, an den der Server (300) die Druckdaten übermitteln soll, das Bestimmen des mobilen Endgeräts (400) des Anwenders, an den der Server (300) die Druckdaten übermitteln soll, unter Bezug auf eine Zuordnungstabelle (310) umfasst, in der die Anwenderidentifikationsinformationen Identifikationsinformationen mobiler Endgeräte, die den Anwenderidentifikationsinformationen entsprechen, zugeordnet sind.

19. Druckverfahren nach einem der Ansprüche 11 bis 18, wobei das Übertragen der Druckdaten von dem mobilen Endgerät (400) an das Bilderzeugungsgerät (500) umfasst:
Anzeigen einer Liste der gespeicherten Druckdaten auf einem Display des mobilen Endgeräts (400);
Empfangen einer Auswahl der Druckdaten, die ein Bild erzeugen sollen, vom Anwender; und
Übermitteln der ausgewählten Druckdaten an das Bilderzeugungsgerät (500).

20. System nach einem der Ansprüche 1-9 oder das Druckverfahren nach einem der Ansprüche 11-19, wobei die drahtlose Kurzstreckenkommunikation eine Kommunikation unter Verwendung einer Nahfeldkommunikation, NFC, Wi-Fi Direct und Bluetooth umfasst.

## Revendications

1. Système (100) de réalisation d'impression à l'aide d'un terminal mobile (400), le système (100) comprenant :
un dispositif informatique (200) qui transmet des données d'impression et des informations d'identification d'utilisateur à un serveur (300) ;
le serveur (300) qui détermine un terminal mobile (400) d'un utilisateur auquel le serveur (300) doit transmettre les données d'impression, à l'aide des informations d'identification d'utilisateur, et transmet les données d'impression au terminal mobile déterminé (400) via un réseau système du système (100) ;
comprenant en outre le terminal mobile (400) qui stocke les données d'impression reçues et est configuré de manière à établir une communication sans fil à courte portée avec un appareil de formation d'image (500) ; et
l'appareil de formation d'image (500) qui reçoit les données d'impression provenant du terminal mobile (400) via la communication sans fil à courte portée, et imprime les données d'impression reçues.

2. Système selon la revendication 1, comprenant en outre un serveur d'authentification (600) qui reçoit une demande d'authentification d'utilisateur, les informations d'identification d'utilisateur, et des informations d'identification du terminal mobile déterminé (400) provenant de l'appareil de formation d'image (500), détermine si l'utilisateur est autorisé, en fonction des informations d'identification d'utilisateur et des informations d'identification de terminal mobile, et transmet un résultat de la détermination à l'appareil de formation d'image (500).

3. Système selon la revendication 1 ou 2, dans lequel le terminal mobile (400),
lorsque le terminal mobile (400) est étiqueté en communication en champ proche (NFC) avec l'appareil de formation d'image (500) qui prend en charge la NFC, reçoit les informations d'identification de l'appareil de formation d'image (500) étiqueté NFC nécessaires à la communication sans fil à courte portée avec l'appareil de formation d'image étiqueté NFC,
établit la communication sans fil à courte portée avec l'appareil de formation d'image (500) à l'aide des informations d'identification de l'appareil de formation d'image (500) étiqueté NFC.

4. Système selon une quelconque revendication précédente, dans lequel
le serveur (300) génère et stocke une clé de chiffrement pour les données d'impression et chiffre les données d'impression à l'aide de la clé de chiffrement, et
l'appareil de formation d'image (300) transmet des informations d'identification de données d'impression, des informations d'identification d'utilisateur, et des informations d'identification de terminal mobile avec une demande de clé de chiffrement au serveur (300) afin de déchiffrer les données d'impression chiffrées, reçoit la clé de chiffrement provenant du serveur (300) lorsque le serveur (300) détermine que la demande de clé de chiffrement est acceptée, et déchiffre les données d'impression chiffrées à l'aide de la clé de chiffrement afin de former une image.

5. Système selon une quelconque revendication précédente, dans lequel le serveur (300) établit un moment où transmettre les données d'impression au terminal mobile (400) et transmet les données d'impression au terminal mobile (400) au moment établi.

6. Système selon une quelconque revendication précédente, dans lequel le serveur (300) restitue les données d'impression en un fichier dans un format qui est pris en charge par l'appareil de formation d'image (500), et transmet le fichier.

7. Système selon une quelconque revendication précédente, dans lequel le terminal mobile (400) stocke les données d'impression dans une zone de sécurité du terminal mobile (400) .

8. Système selon une quelconque revendication précédente, dans lequel le serveur (300) comporte une table de mappage (310) dans laquelle les informations d'identification d'utilisateur sont mappées avec des informations d'identification de terminal mobile correspondant aux informations d'identification d'utilisateur, et détermine le terminal mobile (400) auquel le serveur (300) doit transmettre les données d'impression, en se référant à la table de mappage (310).

9. Système selon une quelconque revendication précédente, dans lequel le terminal mobile (400) et l'appareil de formation d'image (500) prennent en charge aussi bien un rôle en tant que point d'accès (AP) pour fournir une connexion entre clients dans un environnement de communication sans fil qu'un rôle en tant que client.

10. Support d'enregistrement lisible par ordinateur non transitoire sur lequel est enregistré un programme informatique, qui, lorsqu'il est exécuté par un ordinateur, exécute le procédé selon l'une des revendications 11 à 19.

11. Procédé d'impression utilisant un terminal mobile (400), le procédé d'impression comprenant :
la transmission de données d'impression et d'informations d'identification d'utilisateur d'un dispositif informatique (200) à un serveur (300) ;
la détermination d'un terminal mobile (400) d'un utilisateur auquel le serveur (300) doit transmettre les données d'impression, à l'aide des informations d'identification d'utilisateur ;
ce qui permet de :
transmettre les données d'impression au terminal mobile déterminé (400) via un réseau système du système (100) ;
stocker les données d'impression dans le terminal mobile (400) ;
établir une communication sans fil à courte portée entre le terminal mobile (400) et un appareil de formation d'image (500) ;
transmettre les données d'impression du terminal mobile (400) à l'appareil de formation d'image (500) via la communication sans fil à courte portée ; et
imprimer les données d'impression.

12. Procédé d'impression selon la revendication 11, dans lequel
la transmission des données d'impression du terminal mobile (400) à l'appareil de formation d'image (500) comprend en outre la transmission d'informations d'identification du terminal mobile (400) à l'appareil de formation d'image (500), et
l'impression des données d'impression consiste :
à transmettre une demande d'authentification d'utilisateur, des informations d'identification d'utilisateur, et des informations d'identification de terminal mobile de l'appareil de formation d'image (500) à un serveur d'authentification (600) situé à l'intérieur ou à l'extérieur du serveur (300) ;
à déterminer si l'utilisateur est autorisé, en fonction des informations d'identification d'utilisateur et des informations d'identification de terminal mobile ;
à transmettre un résultat de la détermination à l'appareil de formation d'image (500) ; et
à imprimer les données d'impression lorsqu'il est déterminé que l'utilisateur est autorisé.

13. Procédé d'impression selon la revendication 11 ou 12, dans lequel la transmission des données d'impression du terminal mobile (400) à l'appareil de formation d'image (500) comprend :
lorsque l'appareil de formation d'image (500) qui prend en charge la NFC est étiqueté par le terminal mobile (400), la réception d'informations d'identification de l'appareil de formation d'image (500) qui sont nécessaires à la communication sans fil à courte portée avec l'appareil de formation d'image (500), dans lequel la réception est effectuée par le terminal mobile (400) ; et
l'établissement de la communication sans fil à courte portée avec l'appareil de formation d'image (500) à l'aide des informations d'identification de l'appareil de formation d'image (500).

14. Procédé d'impression selon l'une quelconque des revendications 11 à 13, dans lequel
la transmission des données d'impression au terminal mobile déterminé (400) comprend :
la génération et le stockage d'une clé de chiffrement pour les données d'impression ;
le chiffrement des données d'impression à l'aide de la clé de chiffrement ; et
la transmission des données d'impression chiffrées au terminal mobile (400),
l'impression des données d'impression comprend :
la réception des données d'impression chiffrées provenant du terminal mobile (400) ;
la transmission au serveur (300) d'informations d'identification de données d'impression, d'informations d'identification d'utilisateur, et d'informations d'identification de terminal mobile, ainsi qu'une demande de clé de chiffrement, afin de déchiffrer les données d'impression chiffrées ;
la réception de la clé de chiffrement provenant du serveur (300) lorsque le serveur (300) détermine que la demande de clé de chiffrement est acceptée ;
le déchiffrement des données d'impression chiffrées à l'aide de la clé de chiffrement ; et
l'impression des données d'impression déchiffrées.

15. Procédé d'impression selon l'une quelconque des revendications 11 à 14, dans lequel la transmission des données d'impression au terminal mobile déterminé (400) comprend :
l'établissement d'un moment où transmettre les données d'impression au terminal mobile (400) ; et
la transmission des données d'impression au terminal mobile (400) au moment établi.

16. Procédé d'impression selon l'une quelconque des revendications 11 à 15, dans lequel la transmission des données d'impression au terminal mobile déterminé (400) comprend :
la restitution des données d'impression en un fichier dans un format pris en charge par l'appareil de formation d'image (500) ; et
la transmission du fichier restitué au terminal mobile (400) .

17. Procédé d'impression selon l'une quelconque des revendications 11 à 16, dans lequel le stockage des données d'impression dans le terminal mobile (400) comprend le stockage des données d'impression dans une zone de sécurité du terminal mobile (400).

18. Procédé d'impression selon l'une quelconque des revendications 11 à 17, dans lequel la détermination du terminal mobile (400) de l'utilisateur auquel le serveur (300) doit transmettre les données d'impression comprend la détermination du terminal mobile (400) de l'utilisateur auquel le serveur (300) doit transmettre les données d'impression, en se référant à une table de mappage (310) dans laquelle les informations d'identification d'utilisateur sont mappées avec des informations d'identification de terminal mobile correspondant aux informations d'identification d'utilisateur.

19. Procédé d'impression selon l'une quelconque des revendications 11 à 18, dans lequel la transmission des données d'impression du terminal mobile (400) à l'appareil de formation d'image (500) comprend :
l'affichage d'une liste des données d'impression stockées sur un affichage du terminal mobile (400) ;
la réception d'une sélection des données d'impression qui doivent former une image, en provenance de l'utilisateur ; et
la transmission des données d'impression sélectionnées à l'appareil de formation d'image (500).

20. Système selon l'une quelconque des revendications 1 à 9 ou procédé d'impression selon l'une quelconque des revendications 11 à 19, dans lequel la communication sans fil à courte portée comprend une communication à l'aide de l'un parmi une communication en champ proche - NFC, Wi-Fi Direct et Bluetooth.
